# EUROPEAN PATENT APPLICATION

(11) **EP 1 260 886 A2**
(43) Date of publication of application: **27.11.2002**
(21) Application number: 02011160.5
(22) Date of filing: 21.05.2002
(51) Int. Cl.: G05B 15/02, G05B 23/02

(54) **Home automation system**

(30) Priority: 23.05.2001 IT TO20010477; 23.05.2001 IT TO20010478; 23.05.2001 IT TO20010479; 23.05.2001 IT TO20010480; 23.05.2001 IT TO20010481
(71) Applicant: Domustech S.P.A., 10015Ivrea (TO) (IT)
(72) Inventor: Bonassi, Claudio, 20020 Cesate (MI) (IT); Colombo, Pierangelo, 20033 Desio (IT); Giua, Alberto Federico, 21013 Gallarate (VA) (IT); Hauptman, Michael, 21014 Laveno (VA) (IT)

(57) **Abstract**

Home automation system (31) comprising an array of functional devices (37), a plurality of input devices (38) associated with the array of functional devices and a control unit (49), interconnected via radio link and constituting a home automation system (32). The system (31) is employed in combination with an autonomous safety/security system (33) having input sensors (41), local and/or remote signalling devices (42) and a control unit (43) between the sensors and the signalling devices. The system also comprises connecting means between the control unit (43) of the safety/security system and the control unit (49) of the automation system (32) for activation of the safety/security system by the automation system and/or for activation of the automation system by the safety/security system.

## Description

**Background of the invention -** This invention relates to a home automation system. More specifically, the invention concerns a home automation system comprising a set of functional devices, a plurality of input devices associated with the above-mentioned set of functional devices and a control unit for the devices, interconnected via radio in accordance with the introductory part of claim 1.

**Prior art -** Known home automation systems of this type are difficult to integrate in existing systems. Often these home automation systems entail disadvantages in terms of aesthetics and functionality, they have considerable limitations and are difficult for users to operate.

**Summary of the invention -** One object of this invention is to produce a highly versatile home automation system, that may be easily installed in the surrounding environment and which can work in cooperation with systems of various types.

These objects are achieved by the home automation system of the invention, according to the characteristic part of claim 1.

A system of this type also permits easy integration with security systems which are intrinsically "closed" systems and not open to connections with systems other than the proprietary ones.

According to another characteristic, the system of the invention comprises a control unit, substantially consisting of a computer for connection to the Internet (Webphone), for managing and monitoring the status of the input devices and of the functional devices according to the characteristic part of claim 6.

This system grants comfortable visual control and management of the various devices, making them easy and intuitive to activate and remotely control.

Another characteristic of the control unit (Webphone) is described in the characteristic part of claim 20, and ensures that this unit has minimal dimensional conditions.

According to another characteristic, integration of the home automation system is possible with a video-audio entry control system, as indicated in the characteristic part of claim 13.

Finally the system is suitable for controlling the electrical loads of at least one socket managed according to the characteristic part of claim 15, so as to minimize the possibilities of a black out.

The characteristics of the invention will become clear from the description that follows, provided solely by way of non-restrictive example, with the aid of the accompanying drawings, in which:
Fig. 1 represents a general block diagram of a home automation system according to the invention;
Fig. 2 is a block diagram of a part of the system of figure 1;
Fig. 3 is a detail of a system of Fig. 1 in a first configuration;
Fig. 4 represents the detail of Fig. 3 in a second configuration;
Fig. 5 is a block diagram of the detail of Fig. 3;
Fig. 6 is a logical diagram of an operating state of the system of Fig. 1;
Fig. 7 is an exploded view of an embeddable module of the system of Fig. 1;
Fig. 7a is a perspective view illustrating, in assembled form, a generic module of the embeddable modules of the system of Fig. 1;
Fig. 7b is an exploded, perspective view, illustrating in detail the various parts comprising the module of Fig. 7a;
Fig. 7c is a perspective view illustrating in detail an electronic assembly accommodated in the module of Fig. 7a;
Fig. 7d is an exploded view of a modular assembly produced from coupling the module of Fig. 7a with a complementary external plate of the button panel type;
Fig. 7e shows in detail the zone of the coupling of the plate and the module which together form the modular assembly of Fig. 7d.
Fig. 8 is a rear view of the part of Fig. 7;
Fig. 9 is a detail of the system of the invention;
Fig. 10 represents an embeddable controlled socket of the system of the invention;
Fig. 10a is a perspective view illustrating, in assembled form, an embeddable controlled socket of the system of the invention;
Fig. 10b is an exploded, perspective view, showing in detail the various parts comprising the controlled socket of Fig. 10;
Fig. 10c is a perspective view showing the controlled socket of Fig. 10 coupled with a cover;
Fig. 11 represents yet another detail of the system of the invention;
Fig. 12 shows a block diagram of other parts of system of figure 1;
Fig. 13 represents another detail of the system of the invention;
Fig. 14 shows a block diagram of other part of the system of figure 1;
Fig. 15 represents a modular and expandable plate of the system of the invention;
Fig. 16 represents a second embodiment of the modular and expandable plate of the system of the invention.

### DESCRIPTION OF THE PREFERRED EMBODIMENT

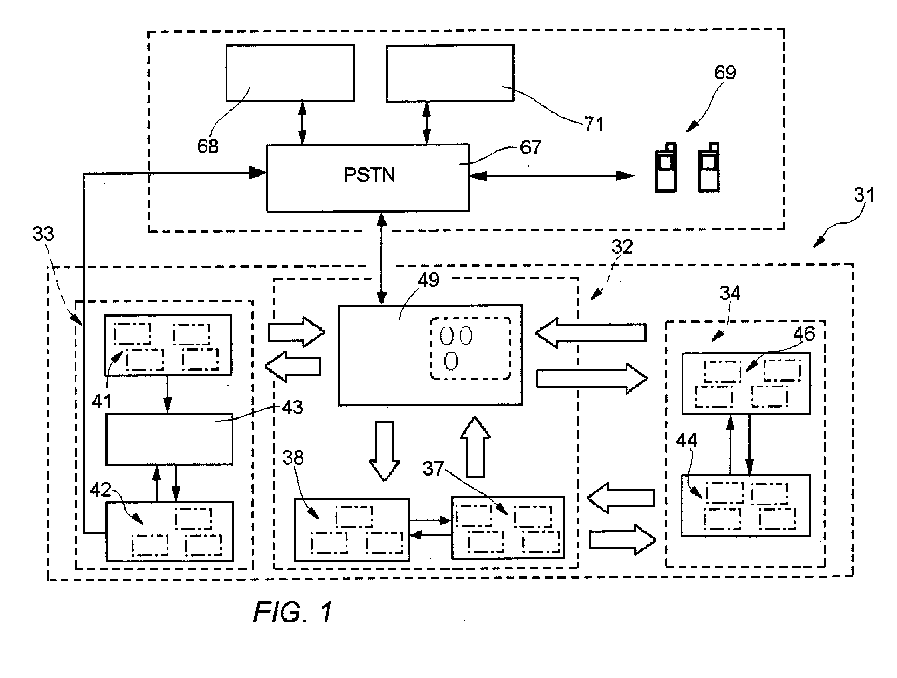

With reference to figure 1, a home automation system having as its primary application residential electrical systems is generically designated with the numeral 31. The system comprises most of the functions available today for the management, safety, comfort, and communication of a domestic environment.

The system 31 is based on an essentially electronic and distributed intelligence type hardware architecture, in which the intelligence and the memory needed for operation are resident in each individual device.

As regards specific applications, the system is made up of three installations 32, 33 and 34, respectively Home Automation, Security/Safety and video-audio entry control.

The home automation installation 32 has a series of functional devices 37 and input devices 38 associated with the functional devices 37 distributed between the rooms of the home and its surroundings, connected between one another on radio frequency (RF) in the frequency band of 868.0-868.6 MHz. The choice of this means of communication offers particular advantages, especially of installation, as it permits comfortable application of the devices, whether in creating new systems or when replacing and/or boosting existing systems.

A radiofrequency type installation grants certain control points or sensors absolute independence of wirings, position and other constraints. These components may also be exempted from connection to the electric mains (230V) thanks to their being self-powered by a battery. In addition, the same control points/sensors may be entirely independent of the physical position of the actuators, thanks, this time, to the possibility of creating free logical associations between the individual devices during installation.

The command/control messages of a home automation system are, moreover, fairly simple and the cost associated with the radiofrequency transmission technology is fairly low with respect to the global system costs.

The safety/security system 33 comprises input sensors 41, local and/or remote signalling devices 42 and a control unit 43 between the sensors 41 and the signalling devices 42. These components may be of the commercial type and be interconnected by radio link, at a frequency of 433.92 MHz, according to one typical standard.

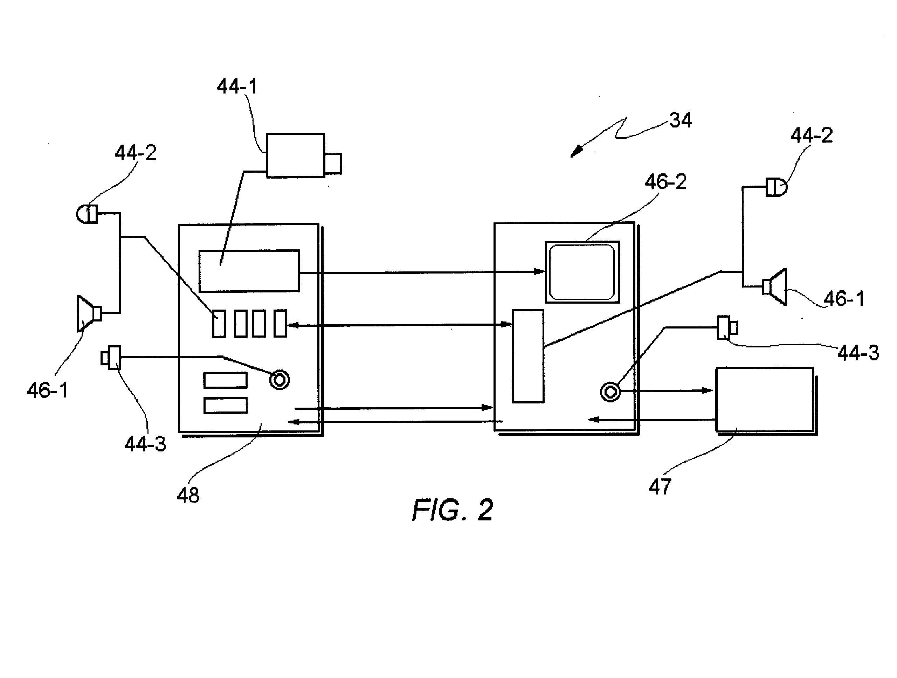

The video-audio entry control system 34 comprises input devices 44 and output devices 46 distributed between an internal position 47 (Fig. 2) and one or more external positions 48. The input devices may include telecameras 44-1, microphones 44-2 and control buttons 44-3, while the output devices may comprise loudspeakers 46-1, display units 46-2 and various actuators. The system 34 may be integrated with the system 32 and use the same RF transmission technology. This system may however use broad band systems known in the art, for example micro waves according to the Bluetooth standard.

According to a first aspect of the invention, the system 31 (Fig. 1) comprises a control unit 49 for controlling and monitoring the status of the devices 37, 38 of the system 32 and of the devices 41, 42 and 44, 46 of the systems 33 and 34.

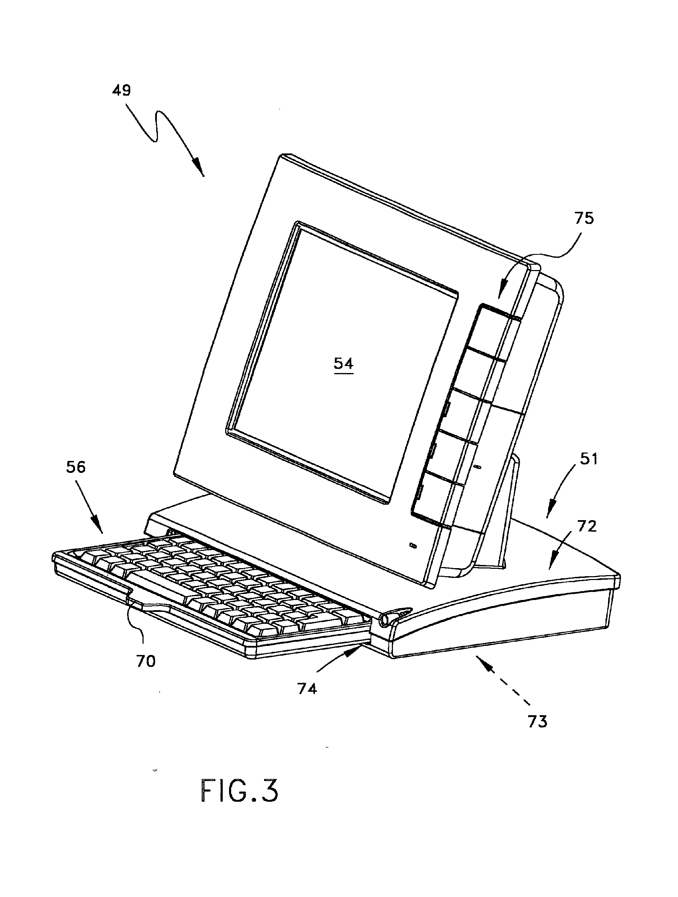

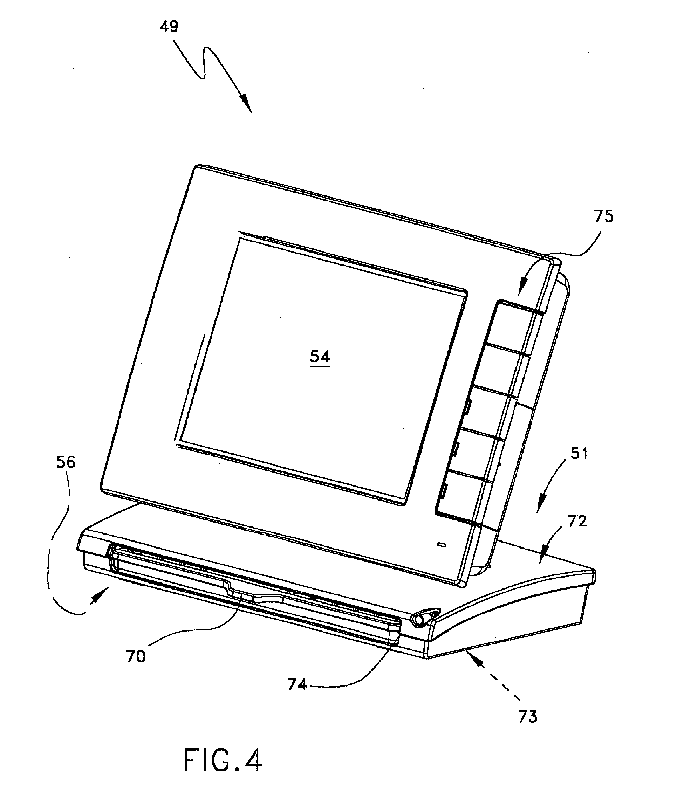

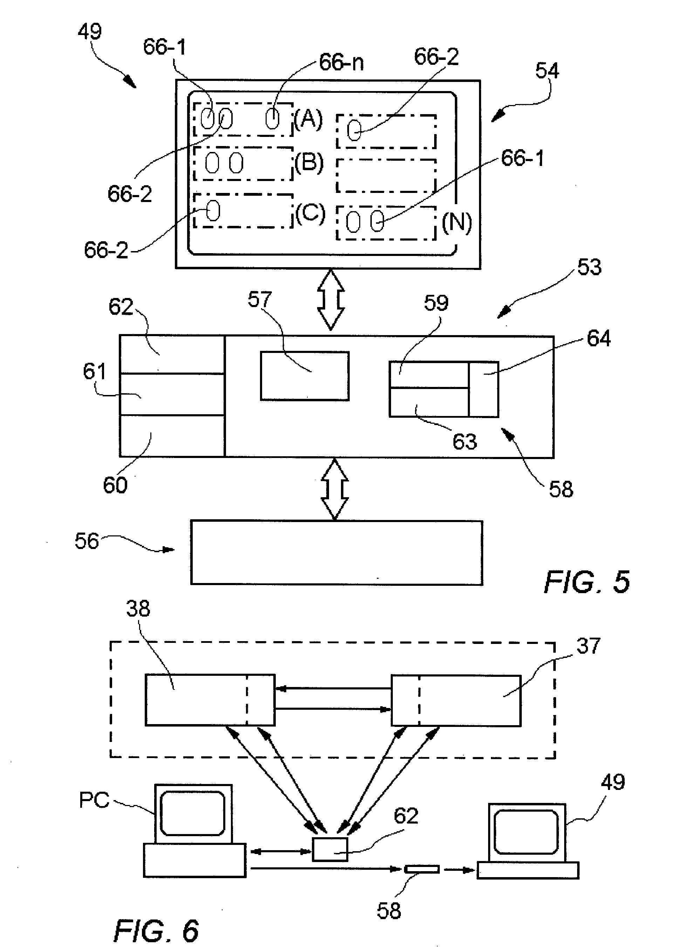

The control unit 49 substantially consists of a personal computer for connection to the Internet (Webphone) (Figs. 3 and 4), having a main case 51 for a central unit 53 (Fig. 5) and for the various system components, a display screen 54 and a keyboard 56. Of the system components, the control unit 49 (Fig. 5) comprises a DRAM memory 57, a Flash Memory 58 with an operating system 59, a Flash Memory or Smart Card reader 60, a modem 61 for connection to the telephone network and a radiofrequency module 62 connected to a serial interface. The operating system 59 is, for example, of the Windows CE type.

The memory 58 is suitable for having an application program 63 loaded and for receiving information for configuring the system and installing its devices. A section 64 of the memory 58 is reserved by the program 63 for a data bank function. In it information is stored about the environments that the system 31 works in, the distribution of the devices 37 and 38 in these environments and in the outside world and their operating status. The program 63 is also suitable for associating a specific icon with each type of device 37, 38.

Part of the program 63 is suitable for reading the installation information in the section 64 of the memory 58 and for representing on the screen 54 (Fig. 5) the environments (A), (B), (C), ...(N) , as icons 66-1, 66-2, .... 66-n, with the devices 37, 38 installed and their operating status.

The program 63 is suitable for associating the selection of one of the icons with the actuation of the device 37 38 associated with that icon. To advantage, the screen 54 is of the touch screen type and, in response to the user touching an icon on the screen, the program 63 is suitable for generating a code intended for the device represented and which is transmitted by the RF module 62.

According to another aspect of the invention, the memory 58 is also suitable for storing the values of variables associated with some functional devices 37, 38, and keeping them up to date. The program 63 is suitable for dynamically representing on the screen 54 the status of a given functional device (37) as a bar chart, and for enabling the user to adjust the functional device (37) in response to touching and displacing an indicator on the bar chart.

Via the modem 61 of the unit 49, the system 31 (Fig. 1) is also liable to be remotely controlled through the PSTN 67. As a result, access from and to the system 31 may be remotized so that reports may be sent, commands received and the systems 32, 33 and 34 monitored from landline telephone numbers 68, from cellular phones 69 or from service centres 71 for tele-repair purposes.

According to a particular aspect of the invention, the screen 54 (Fig. 3) is of the STN LCD type or with slim display components and is integrated with the case 51 and with the keyboard 56. The case 51 has a section 72, the function of which is to act as a base for the screen and in which there is an upper surface 73 that the Webphone may be set on. Made in the front part of the section 72 is a housing bay 74 adjacent to the surface 73 and the keyboard 56 may be accommodated, drawer style, in the bay 74, according to the minimum clearance configuration of figure 4.

In this configuration, the Webphone 49 is operational for selection of the icons with control of the devices 37 and 38 and for the telephony functions true and proper, linked to the buttons 75 housed at the sides of the screen. The keyboard 56 is extractable, facilitated in this by a handle 70 and borne on the support plane, putting the Webphone in the fully operational configuration of figure 3.

The functional features of the Webphone are those already known of Internet access, e-mail service with management of password-protected mailboxes; Internet browser; hands-free telephone with echo suppression; phone book with abbreviated dialing; and integrated answering machine.

In the home automation system 31, the control unit 49 (Fig. 1) exchanges the following types of information: command signals outgoing or in reception; control signals, such as status of the devices, failures, etc. to the control unit 49; audio signals outgoing or in reception for the video-audio entry control system 34; and video signals to the control unit 49 for the system 34. There is also an exchange of controls/commands between the video-audio entry control system 34 and the automation system 32 for management of openings/reporting etc.

Figure 1 shows how the internal architecture of the home automation 32 and video-audio entry control 33 systems differs from that of the safety/security system 33. Systems 32 and 34 are based on a distributed intelligence architecture in which the logic of correlation among the devices is determined during installation and is resident in the memory of each of the devices. System 33, on the other hand, has an architecture based on the control unit 43 through which all the signals from the various sensors transit and from which the actuation commands depart for the local (sirens) and remote (call unit) signalling devices.

Once installed, the single devices 37, 38; 44, 46 will therefore be independent as regards the management of their basic functionalities, thus confining any device failure to the specific application and heightening the reliability of the system with respect to a central type architecture.

Another aspect of the system 31 is represented by the presence of control signals which depart from the functional devices (output) 37; 46 and are sent, following a specific logical correlation between the devices, to the input devices 38, 44 by which the specific command signals were generated.

To guarantee a communication quality of comparable level to that of equivalent systems produced on other support media (a telephone twisted pair TP, or carrier frequency transmission PL), feedback signals are provided for controlling both that the signal is received and also the subsequent status of the output device. Without a confirmation procedure, it is impossible to be sure that transmission has been completed successfully or, at least, be sure of detecting an error or a failure status in the communication system.

In particular, the exchange of information between the functional devices 37 and input devices 38 takes place according to the Lon Talk protocol (Echelon). This allows a message to be repeated until such time as the transmission is completed successfully, with "acknowledgement" messages sent from the receiving functional device to the transmitting input device confirming that the message has been received correctly and the command has been carried out (device status).

The devices 37, 38 of the system 32 are therefore provided with RF transceivers for bidirectional communications. This is also the case of the RF module 62 of the control unit 49 and of the RF module in the control unit 43.

For communications between the devices 44, 46 of the video-audio entry control system involving the transmission of pictures and sound, a broad band network is instead provided. The transmission of pictures may be mono-directional, whereas the audio is obviously two-way.

The typical automations of the system 34 (opening gates, doors, etc.), involves devices 44, 46 provided with bidirectional RF transceivers of the same type as used in the devices 37 and 38 and the exchange of information occurs in the same way as for the automation system 32.

In the home automation system 32, the control unit 49 exchanges command/control information with the devices 37, 38 and, through the icon-based screen display, allows the user to monitor and control both the system itself and the connection to the telephone network for remote control of the system. The Webphone can thus establish a specific communication with each single input/output device for: sending command signals to the output devices; displaying their status (On/Off, battery charge level, preset parameters); and modifying the parameters.

Thus, the control unit 49 can "increase" the intelligence of the system 31 in terms of: logical programming of the system functions (AND, OR, NOT logical functions); time-based programming of the system functions (by calendar, weekly, hourly); and synchronization of the devices.

The safety/security system 33 may be derived from an existing independent system having input sensors 41, local and/or remote signalling devices 42 and the control unit 43 connected according to the original manufacturer's selected transmission technique. However, according to another aspect of the invention, the control unit 49 comprises connecting means to the control unit 43 of the system 33 for programmed activation of the safety/security system by the automation system and/or for programmed activation of the automation system by the safety/security system.

These functions may be implemented, for instance, by providing the module 62 of the control unit 49 a protocol converter for communication with the control unit 43 of the system 33. In turn, an output (potential-free contact) of the control unit 43 may be connected to an RF interface for transferring a command to the automation system 32. These communication possibilities may also be extended to the single devices 37 and 38.

General management of the safety/security system 33 and of the alarm states is preferably left to the control unit 43. Communications between the sensors/actuators 41, 42 and control unit 43 are maintained by the proprietary communication system.

In data exchanges, the unit 49 is brought information normally managed by the control unit 43 of the safety/security system, such as: identification of the areas and types of sensors installed, status of the sensors, battery charge levels, failures, alarm reports, logs etc. This information is displayed on the webphone 49 for performing commands to include/exclude the control unit 43 and/or particular areas or specific sensors/actuators. Access to the safety/security system 33 may be protected by suitable passwords in the interface between user and control unit 49.

For reasons of safety, a further connection, independent of the telephone network, may be envisaged. To this end, one of the devices 42 includes a self-powering, anti-tamper telephone combining unit, for remote reporting in the event of an alarm coming from the system 33.

Again, according to another characteristic of the invention, the control unit 49 is arranged for connecting the home automation system 31 with the input and output devices of the video-audio entry control system 34 for remoting its manual and/or audio video commands, and the electric and/or audio actuators.

The control unit 49 is suitable for transferring pictures and sound coming from the external control position, to all intents and purposes rendering the Webphone functionally equivalent to an internal video-audio entry control station. In addition, the external position may be connected to the telephone network for remote relaying voice and possibly also images to, for example, UMTS type cell phones 69. For the purpose, the unit 49 may be provided with a broad band module, according to the Bluetooth standard for example, for image and sound transmission. The module 62, on the other hand, provides management of the those automations typical of the system 34 (opening gates, doors, etc.).

A special installation program is used for logical installation of the systems 32 and 33 via an external PC provided with RS 232/RF interface for the radio link with the system 31. Alternatively, this may be entrusted to a special presetting of the Webphone 49.

The following are performed during installation (Fig. 6): physical addressing of the devices; definition of the system topology (assigning of designation and location inside the building); group virtual addressing (correlation between devices); loading of the applications on the devices; configuration of the parameters; and checking that installation has been performed correctly.

The installation program also includes the generation of information about the types of the devices in the system, storing this information as a data bank in the section 64 (Fig. 5) of the Flash Memory 58. By reading this information, the control unit 49 configures in suitable procedures the user interface for the specific system.

In the case of the safety/security system 33 (Fig. 1), the installation initially follows the procedures defined by the manufacturer or the control unit 43 and the relative sensors. The user interface is installed on the control unit 49, at a later time, without any need for the external PC. The installation may be controlled directly by the unit 49 through a specific program loaded from a separate Flash Memory or downloaded from the Internet. Subsequently, the control unit, through the RS232/RF interface, will poll the control unit 43 of the system 33, and in this way obtain all the information needed.

With regard to the physical installation and architecture of the components of the system 31, the functional and input devices of the system offer different solutions for minimizing the wiring requirements whether in new installations, or when replacing and/or supplementing existing electric installations: insertion in existing electric containers (embeddable boxes, switchboards and panels); installation in existing systems without the need for further wiring; and addition of control points and/or sensors without any need for connection to the electricity supply.

The installation configurations are applied variously to each of the devices depending on requirements such as: type of application involved (lighting, heat regulation, etc.); whether or not connection to the electricity supply is needed; consumption levels; minimum dimensions. The possibilities are: embedded installation; wall-mount installation; installation in switchboards/panels; and Plug & Play installation.

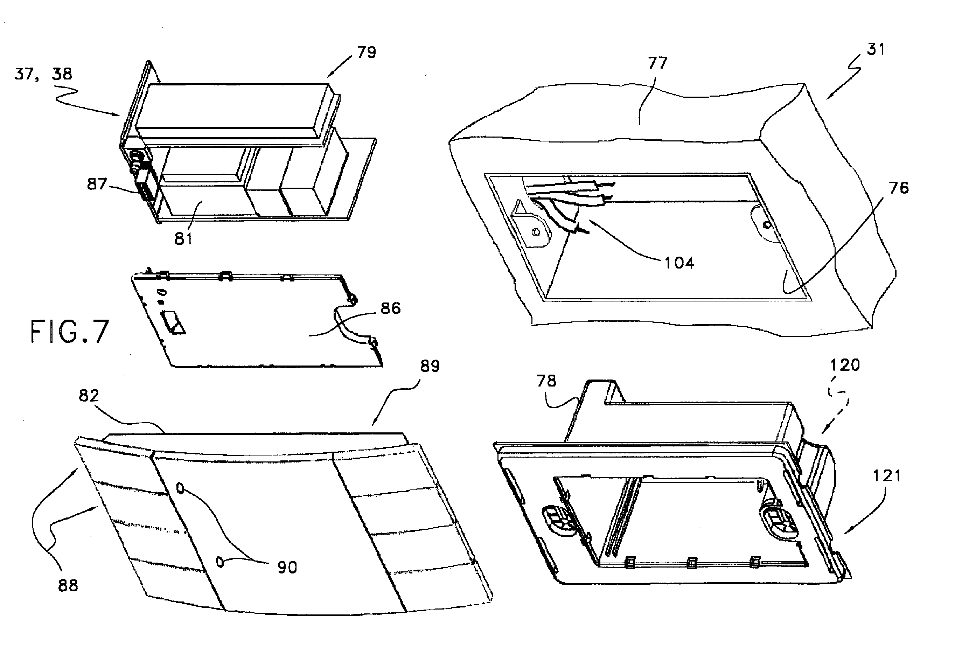

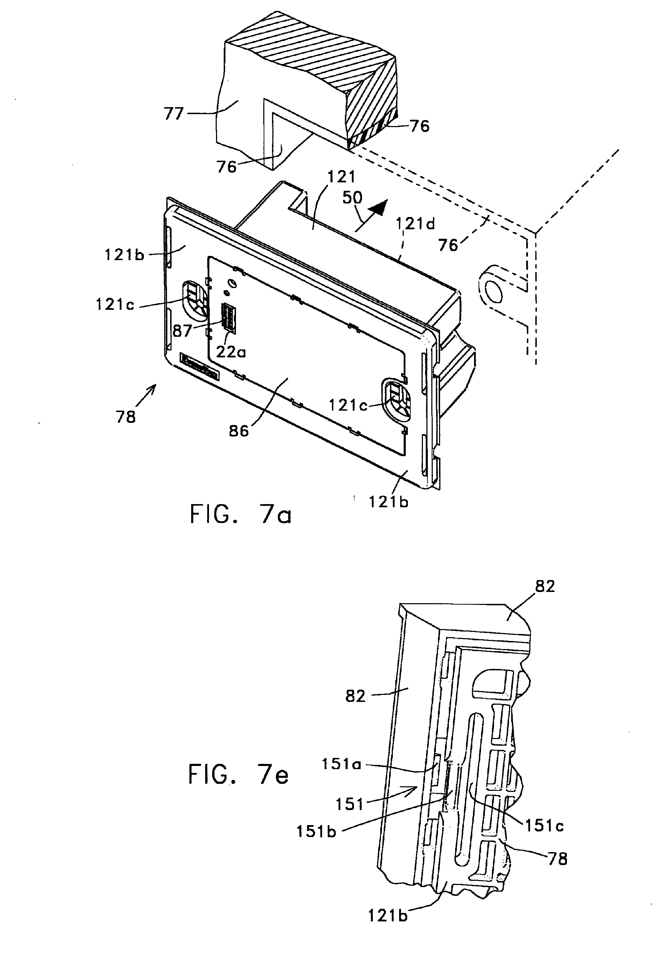

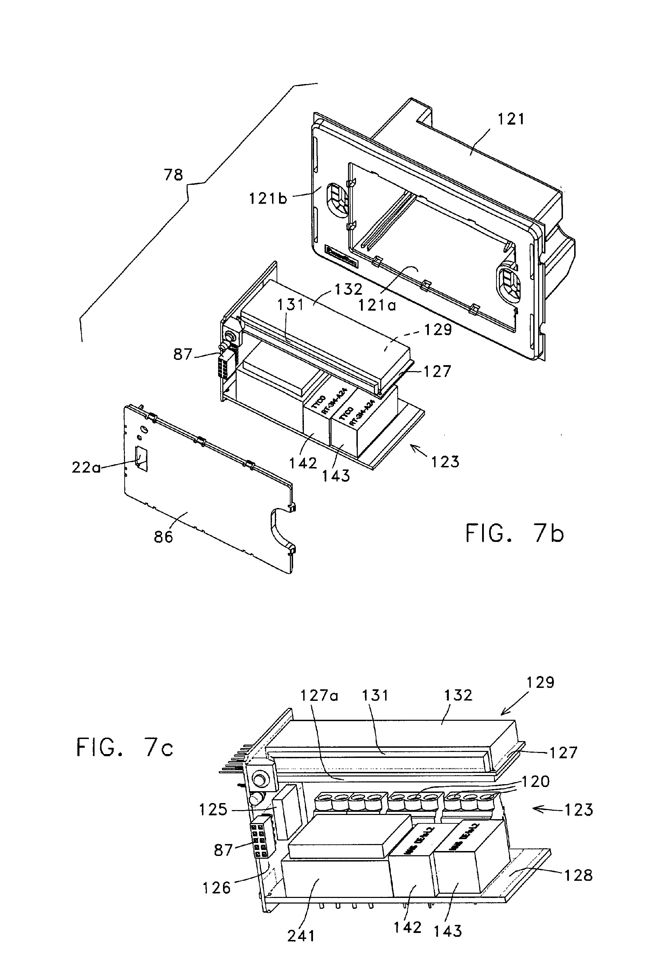

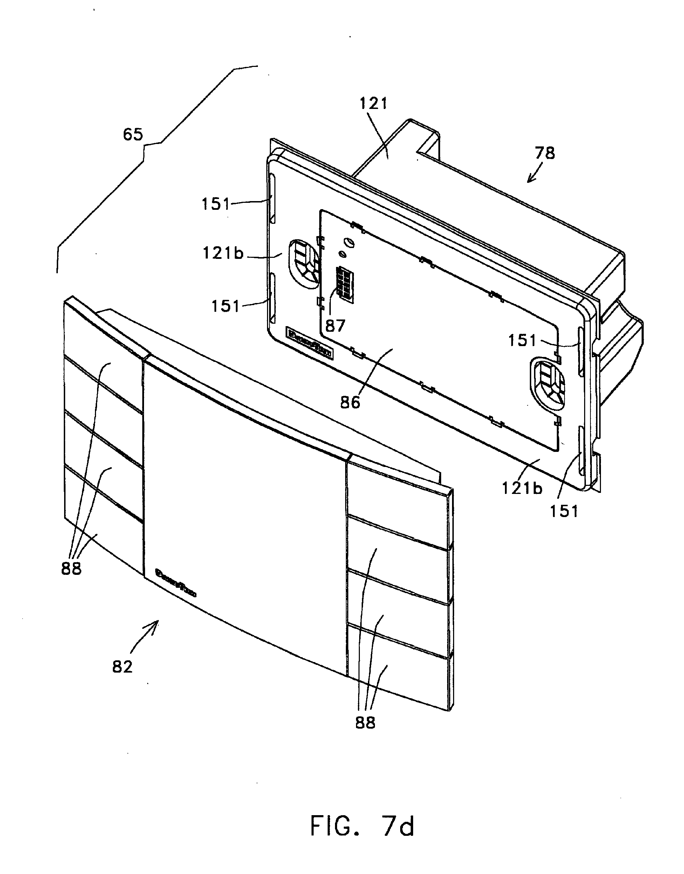

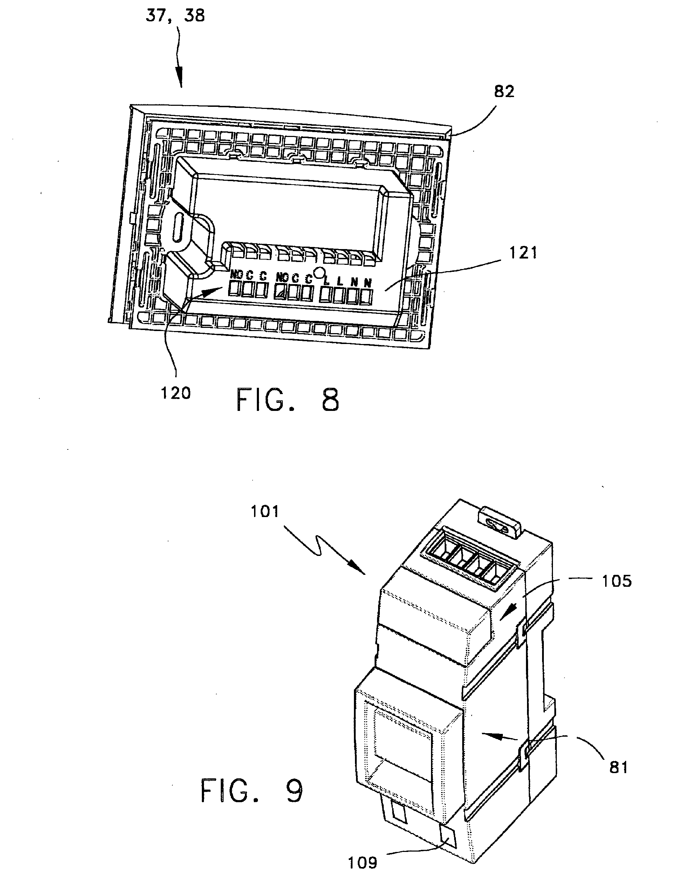

According to another aspect of the invention, the functional devices 37 and/or input devices 38 (Figs.7 and 8) of the system 31 are suitable for being embedded in standardized rectangular boxes 76 measuring 9.6 x 6.0 x 6.0 cm, known as "three-module boxes ", equivalent to the "503" produced by Bticino SpA and fitted into a wall 77. Each device 37, 38 comprises an embeddable module 78, at least one input and/or output module 79 with one or more specific modules 81, and a plate 82.

The embeddable module 78 is made of an outer shell 121 provided with a terminal block 120 for the mains connection and configured to be fitted into the box 76 and a snap-fit lid 86. The module 79 includes a radiofrequency transceiver fitted inside the module 78 for radio interconnection with the other devices 37, 38. The module 79 may include a first section of connector 87 for the plate 82, sensors, one or more relays suitably connected together, LEDs for reporting and other display units and connections with the terminal block 120.

The plate 82 may be applied complementarily on the module 78 and may support one or more keys or buttons 88 defining a button panel 89, and/or display elements 90. The plate has a second section of the connector 87 and can be connected with the input/output module 79 during assembly, being coupled with the first connector section for the transfer of commands and signals between the buttons 88 and/or the display elements 90 and the module 79 itself.

Figs. 7a and 7b illustrate in detail respectively the outer structure, in assembled form, and the inner structure, in broken-down form, of the module 78.

In particular, the module 78 comprises an outer shell 121, flanged type, open along a front side so as to form an aperture 121a; a lid 86 intended to close the aperture 121a on this front side; and an internal electronic assembly, generically indicated with the numeral 123, housed inside the shell 121.

To the front, the shell 121 is provided with a flange 121b extending all around the aperture 121a and is provided with two side holes 121c for screw-fastening of the module 78 to the box 76, preferably of the 503 type, already placed in the wall 77 of the home.

In particular, as shown in Fig. 7a, the module 78 is embeddable in the box 76, bringing the flange 121b to strike against the wall 77, so that the front side of the module 78, defined by the lid 86 and the flange 121b, is substantially flush with the wall 77.

With reference to Fig. 7c, the electronic assembly 123 comprises a lateral electronic board 126, on which a microprocessor 125 is mounted; an upper electronic board 127; and a lower electronic board 128, both perpendicular to the lateral board 126 and fastened to a respective end of the board 126, thereby forming a U-shape structure.

A local program, resident in a memory of the electronic assembly 123 and associated with the microprocessor 125, is suitable for managing certain functions which, in the home automation system 31, are attributed to the module 78. This local program is also suitable for cooperating with the general management program of the home automation system 31, resident in the control unit 49.

The lateral board 126, as well as the microprocessor 125, also bears a connector 87 for electrical connection of the module 78 to a plate 82, better described below, with which the module 78 may selectively be coupled.

As can be seen in Fig. 7a, in the assembled structure of the module 78, the connector 87 extends through a hole 22a in the lid 86 so as to be accessible from the outside and thus be connectable to a corresponding connector in the plate 82.

The upper board 127 bears a radio frequency receiving/transmitting unit 129, or R/F unit, for the exchange of signals via radio between the module 78 and the other parts of the home automation system.

In particular this radio frequency unit 129, hidden in the drawings by a protecting screen 132, is provided for operating in a frequency band of between 868.0 and 868.6 MHz, and for this purpose comprises an antenna 131 for receiving and transmitting through the internal volume of the home.

The antenna 131 consists of a wire, folded in an L shape, which has a first rectilinear portion, not very long, perpendicular to the board 127, and a second, much longer rectilinear portion, which extends adjacent and parallel to a side 127a, of the board 127, arranged towards the front side of the embeddable module 78, or towards the lid 86.

In this way, when the module 78 is accommodated in the box 76 and therefore embeddable in the wall 77 of the home, the antenna 131 assumes a position adjacent to and aligned with the flush line of the wall 77, thereby allowing optimal transmission and reception of the radio signals exchanged between the embeddable module 78 and the other parts of the home automation system.

The protecting screen 132 consists of a thin sheet folded in a C shape and is arranged above the R/F unit 129 for protecting it from any electromagnetic noise.

The antenna 131 may be made in forms different from the rectilinear one described above and, for instance, may be helicoidal shape.

The lower board 128 is arranged for supporting and integrating the actuating functionalities true and proper, also called output, of the electronic assembly 123, and in particular it comprises a transformer 241, which is suitable for transforming the mains voltage into a value suitable for powering the circuits of the electronic assembly 123; and a series of actuators, such as for example a first and a second switch or relay 142 and 143, which are suitable for controlling corresponding consumers and slave systems of the home automation system 31. The lower board 128 also bears a terminal block 120 for electric connection of the embeddable module 78 to the electricity supply line 104.

To this end, the shell 121, along a rear end 121d, is provided with a perforated zone, not shown in the drawing, through which access may be had from the outside to the terminal block 120 for connecting the electricity supply line 104 to it, when the embeddable module 78 is being installed in the corresponding box 76.

The power board 128 may assume various configurations, and in particular may be of the type comprising, in addition to the relay(s), a device known as a "dimmer" making variable regulation of a consumer possible, for instance for modulating the light intensity of one or more light points of the home environment.

As anticipated above and demonstrated clearly in Fig. 7d, the module 78 is intended for being mechanically and electrically coupled along its front end with a plate 82, so as to form a modular assembly 65.

In particular, the mechanical connection is made by means of a plurality of fasteners 151 arranged along the outer edge of the flange 121b, which are intended for cooperating with corresponding fasteners of the plate 82, whereas the electrical connection is made by the connector 87, which is in turn intended for cooperating with a corresponding connector, not seen in Fig. 7d, of the plate 82.

For clarity's sake, Fig. 7e shows in detail the zone of a generic mechanical fastener 151 between the plate 82 and the module 78. In particular the fastener 151 comprises a tooth 151a, formed along the edge of the plate 82, which is suitable for cooperating with a corresponding reduced and yielding portion 151b of the outer edge of the flange 121b of the module 78, wherein said portion is in turn defined by a slot 151c arranged along this outer edge of the flange 121b.

The plate 82 is in turn suitable for assuming various configurations, and for example may be made in the form of a button panel, with two, four or eight keys, or incorporate as well as the keys, sensors or other devices, suitable for effecting certain functions in the home automation system 31.

For simplicity's sake in Fig. 7d the plate is represented in a button panel configuration comprising eight keys 88, arranged on two opposite sides of the plate 82, which are arranged for being manually operated by an operator to activate corresponding command signals for the electronic assembly 123.

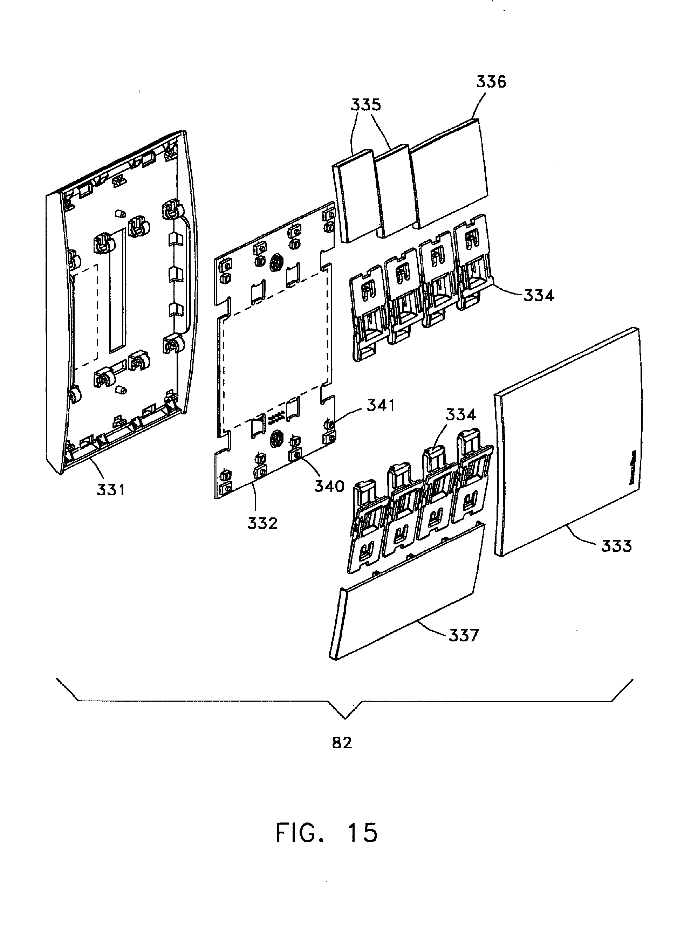

Fig. 15 depicts a modular and expandable plate 82, comprising:
- a support 331;
- a printed circuit 332;
- a plaquette 333;
- eight arms 334;
- key covers 335, for the eight-key button panels;
- key covers 336, for the four-key button panels;
- key covers 337, for the two-key button panels;
- command switches 340;
- LED's341.

The support 331 is mechanically connected to the input and output unit, described in the already mentioned patent application filed by the same applicant on the same date and incorporated herein, by applying manual pressure, with a snap-fitting.

The support 331 is modular, and may therefore be mechanically connected to all the possible variants of the input and output units. Fastened to the support 331 is the printed circuit 332, in which are fitted the electronic control components, the command switches 340, the LED's 341, the electrical plug-in connections to the input and output unit and the contact pads or electrical connections to the specialized plaquette 333.

The printed circuit 332, where the plate performs only the button panel function, may be of two types: the first type, provided with eight command switches 340, used for the plate with eight key covers 335, the second type, provided with only four end switches, located in the corners, for the plate with two or four key covers 337 and 336.

For each command switch 340 in the printed circuit 332 there is a LED 341, which displays the power status of the device connected.

The command switches 340 are programmable, and command powering on, switching off and adjustment of the consumers connected to the plate.

The eight arms 334, pressure-fitted on the support 331, have the function of manually actuating the command switches 340. In addition, as already described, they have been designed in such a way as to maintain the key covers 335, 336, 337 in the correct position, both from the functional and aesthetic point of view.

The key covers are used respectively: for the eight-key button panels, key covers 335; for the four-key button panels, key covers 336; for the two-key button panels, key covers 337.

All the key covers are modular, customizable with suitable icons, may be lighted by the LED's 341, depending on what type of function they are used for, and are fitted in such a way as to occupy the two sectors, right and left, of the plate 82, leaving the central part free for the plaquette 333.

The plaquette 333 may have simply the function of lid in cases where the plate 82 is merely a button panel, or it may be specialized to contain a series of devices such as microphones, intercoms, telecameras, displays, clocks, sensors such as thermostats, infra red sensors, twilight, temperature, gas leak sensors, and the like.

With specialized plaquettes 333, the printed circuits 332 are specific for the various applications and connected by means of contact pads or connections to the plaquettes. The command switches 340, and therefore the keys 335, 336 and 337, may all be dedicated to command of the devices or sensors on the plaquette 333, or be in part free to be programmed at installation time.

The eight arms 334 are always present, whether they have to activate eight command switches 340, or where they command only two or four command switches 340, and the different versions of plaquette 333 and relative printed circuits 332 are interchangeable, thus granting great flexibility whether in the production of the various modules, or in the installation of a new system or the extension or modification of an existing system: in fact, thanks to its modularity, the type of plate may be modified, by replacing solely the plaquette 333 and the corresponding printed circuit 332, and reprogramming the relative control.

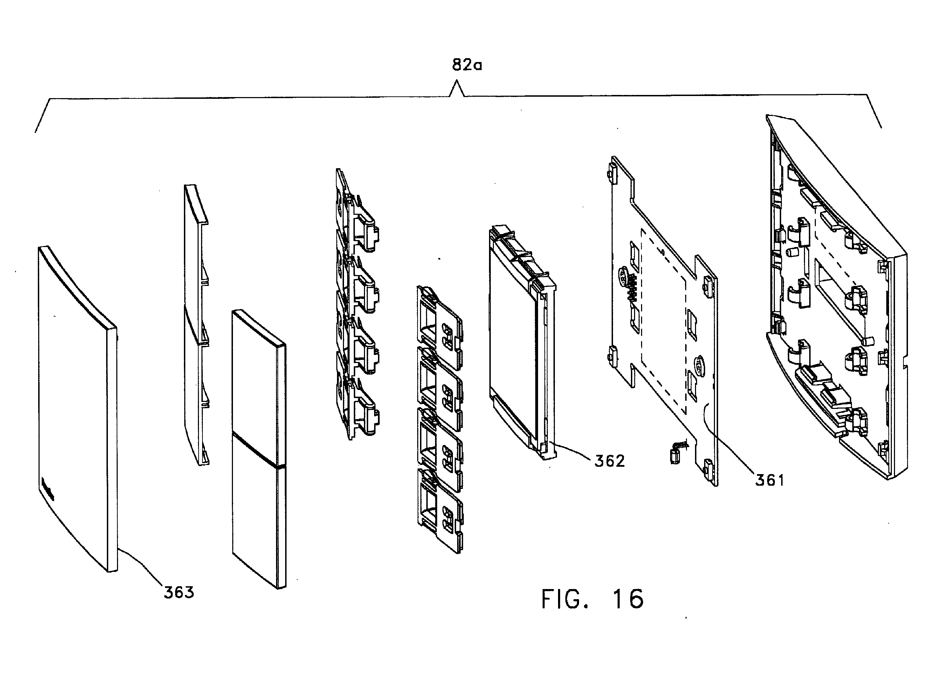

Depicted in Fig. 16 is a second embodiment 82a of the invention which comprises, instead of the single specialized plaquette 333, present in device 82, two elements, consisting for example of a thermostat 362, connected to a board 361, in turn corresponding to the board 332 of the device 82, and a lid 363.

In the installation step, as already said and indicated by the arrow 50 in Fig. 7a, the embeddable module 78 is placed and secured with screws in the corresponding box 76, according to the 503 standard and already arranged on the wall 77 of the home, and also connected to the home electricity supply 104 by means of the terminal block 120. Fitted in this way, the lid 86, corresponding to the front side of the module 78, is flush with the wall 77.

The installation step also comprises a setting or self-teach phase consisting in programming the modules 78 using specific functions that the home automation system 31 and the modules 78 themselves are equipped with.

Accordingly the modules 78 are pre-arranged and configured depending on the user's requirements and the features expressly required of the home automation system 31.

In normal operation, the embeddable module 78 receives certain signals either via radio through the R/F unit 129, or directly from the plate 82 coupled with the module 78 itself, and processes these signals through the microprocessor 125 and the program associated therewith for selectively activating the actuators, such as the switches 142 and 143, incorporated in the module 78.

The module 78 may also perform functions that are not strictly speaking of activation, and for instance, through the radio-frequency unit 129, may receive data and information from certain parts of the home automation system 31 in order to route these, following processing, to other parts of the system.

It is therefore clear that the embeddable module 78 works substantially as an interface for managing and processing signals and commands activated by the home automation system 31, in particular by the control unit 49, and/or by the plates 82 coupled with the modules 78, and/or by the sensors, etc...., for the consumers and/or the devices and/or home systems which are slave systems of the home automation system 31. In this sense, the embeddable module 78 may be configured as a node through which the data and commands governing the home automation system 31 are routed and actuated.

The rectangular embeddable box 76, for three modules, is a *de facto* standard in Italy and is also to be found in other European geographical areas and beyond Europe. Embeddable solutions are arranged for in cases where connection to the electricity network is necessary (or simply convenient). An embeddable module, provided for example with a 16° A relay, may be substituted without any need for additional wirings to an equivalent electromechanical switch.

The space available is optimized, taking the number of functions that may be implemented in a single module to the maximum level possible. While on this subject, integration of input and output functions may be envisaged. For example, as illustrated in fig. 7, it is possible to manage two relay outputs and a button panel 89 with 8 control points, all from a single interface. Obviously solutions such as this allow cost of the radio interface and of the micro-controller to be shared among numerous functions, accordingly lowering the overall cost.

Wall-mount installation arises from the opportunity offered by RF communication to be able to envisage a device 37, 38 at any point of the environment, even where the electricity supply is not available, or where connection is not deemed necessary (for example, in the case of buttons and sensors). The power comes from a suitable battery located inside the module 79 which, in this case is rectangular shape, slim, and remains fully connectable to the plate 82. Both solutions, embedded or on the wall, are based on the same modules, i.e. button panels, sensors or thermostats.

Installation in switchboards and panels is used for the devices which, in traditional type systems, are normally produced conforming to the DIN standards. For the system 31, this is the chosen option for load management central units, actuator modules for heat regulation and sprinkler control units, installed in similar containers and for mounting on DIN rails.

Plug & Play installation takes advantage of the connection to traditional power outlets for connection to the electrical mains. It means that a device can be installed without having to perform physical connection with power cables.

The structure of the input and/or output module 79 with radiofrequency transceiver and of the specific modules 81 (keys, sensors, one or more relays, LED's and other display units) is also applicable to the devices 37 and 38 of wall-mount installation; in switchboards/panels; and Plug & Play.

As regards general performance, as a non-restrictive example, the automation system 32 may control the following sub-systems: management of electrical loads; sprinkling; lighting; automated doors/gates; automated curtains and blinds; and heating regulation. The system 32 is also capable of managing the operation of household "white" appliances by way of actuators that may be integrated in these appliances.

The system 31 requires a "minimum intelligence" for implementation of its basic functions. Generally, therefore, devices belonging to the system dedicated to the logical/temporal programming function of the systems are not therefore included. These functions are in fact handled by the control unit 49 which, as such, is an "important functional component", though not a critical one, of the system.

For some sub-systems, the logical/temporal programming function a decidedly important aspect. For example, the timer/thermostat function (definition of the temperature set point in time) is implemented solely on the control unit 49. If there is a failure, it will only be possible to control temperature manually on a suitable thermostat.

Another example is that of a sprinkling system where the relay-driven actuator is programmed by the unit 49. Should a failure of this unit occur, actuation of the solenoid valves will be manual only.

The functional 37 and input 38 devices have specific features relative to the functions or the system they are used in. These devices include for example: input/output interfaces; RS232/RF interface; and routers (if necessary). These components do not offer specific system functionalities, but are strictly linked to the basic architecture of the communication system.

Among the devices 37, 38 are the following modules: load management control unit; scenario and timer control unit; button panel; remote control; interface for embeddable plates with and without relays; interface for embeddable plates with dimmer; embeddable controlled socket; interface for relay-driven DIN modules; DIN modules with relays; "loose" controlled socket with or without dimmer; solenoid vale for radiators; buzzer panel; "loose" actuator for shutters; interface for input contacts; interface for wall plates; IR presence sensor with plate; temperature sensor with plate; thermostat with plate; twilight sensor; wind sensor; rain sensor.

The characteristics of the load management control unit (Fig. 9) shall be described in relation to the load management sub-system

The DIN scenario and timer control unit is needed wherever the system 31 has provision for functionalities linked to weekly timing, scenario or control of battery-powered actuator devices. The control unit allows scenario, taken to mean sequences of predefined and possibly timed events, to be stored and subsequently activated. Each scenario is programmable by the control unit 49. The control unit is provided with an internal clock and stores weekly programming of the various devices, as ordinary for events that are weekly and extraordinary for events to be performed once only.

The scenario and timer control unit works as a box capable of storing in a table up to 100 commands, addressed by the battery-powered actuator devices (for example, the commands intended for the solenoid valve of a radiator). Messages read are deleted after they are read and any not read are deleted after a week, greatly increasing service life of the batteries.

The button panel 89 (Fig. 6) can command the switching on, switching off or adjustment of electric loads (through the command of appropriate dedicated apparatus) and displays the actual status of the device on a LED. Normally the keys located on the left correspond to the "On" function and those on the right to the "Off" function; it is however also possible to program a single key to manage the On and Off functions on a cyclical basis.

A dimmer may be associated with the button panel 89, for example for the control of one or more lamps. In this case, a brief pressing of the key switches the lamp on or off whereas a longer pressure regulates the light intensity. A "dimmer with ramp" form of operation is also possible: on pressing the key, the light is switched on and automatically reaches the intensity set, in a time (ramp) predefined in the installation phase. The button panels 89 are powered directly by the input/output module and the separable key-covers, are customized with appropriate symbols.

With the remote control, devices present in the system may be switched on, switch off and adjusted. It includes an On/Off key, 3 scenario control keys and 8 keys for the control of groups or single consumers. The keys as a whole permit the actuation of:
- Scenarios (set of time-sequence commands sent to the various devices to switch on, switch off and adjust components of the home system)
- Grouped commands (for switching one or more consumers on or off); and
- Commands for single devices (buzzers, lights, etc.).

The input/output module 79 for embeddable plates with or without relays (Fig. 7) is an RF input/output interface with which consumers or independent groups of consumers may be commanded. The relays may be variously connected for specific functions and the multi-pole connector 87 permits connection of all the devices that it is possible to associate. The interface receives, processes, transmits, and actuates the commands and data coming from all the devices connected to it at installation time. The device may be prearranged to receive the command from sensors for activating specific functions. It supplies power to the associated customization device and receives commands from the latter and is installed in the "503" embeddable box.

The interface for embeddable plates with dimmer is an RF input/output interface similar to the interface 79 and with a customizable dimmer function: during installation, the command to switch on may be set in "instantaneous" mode (it returns to the same regulation value as was present upon switching-off) or in "progressive" mode (returns to the same regulation value as was present at the time last switched off through a selectable rise ramp). This interface is provided with triac output, it supplies power to the associated customization device and receives commands from the latter.

The interface for embeddable plates without relays is an RF input type interface with which to command consumers or independent groups of consumers; it is provided with a multi-pole female connector which permits connection of all the devices that it is possible to associate. The interface receives, processes and transmits the commands and data coming from all the devices connected to it at installation time and has an input only function. It supplies power to the associated customization device and receives commands from the latter and is installed in the "503" embeddable box.

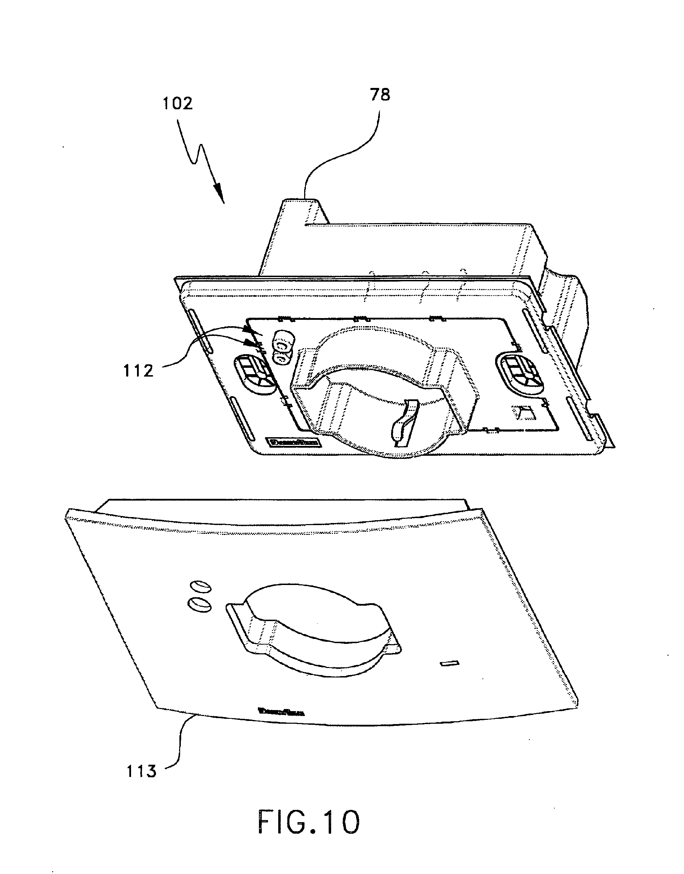

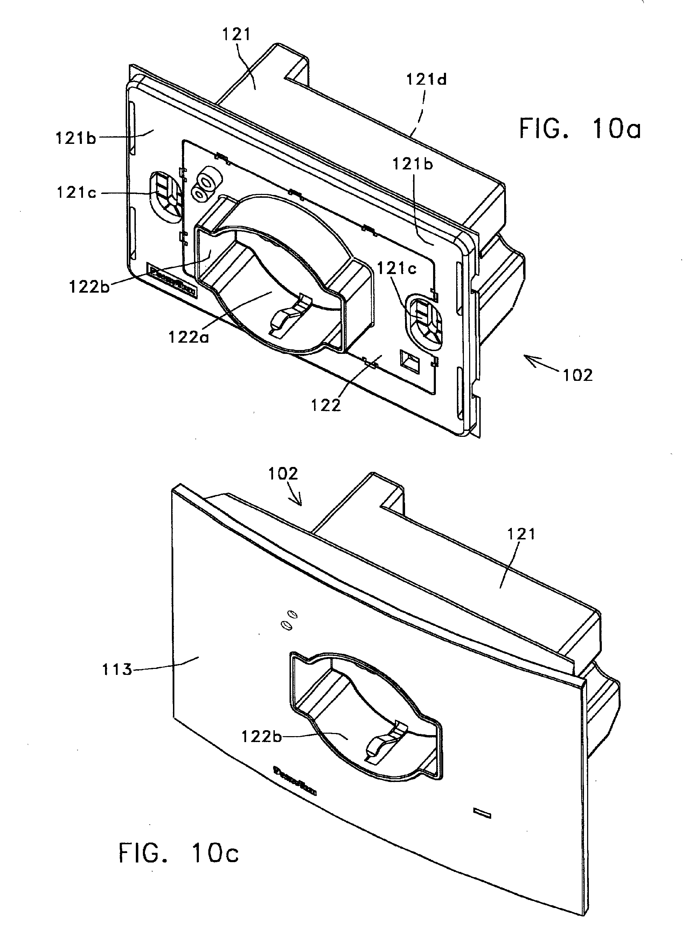

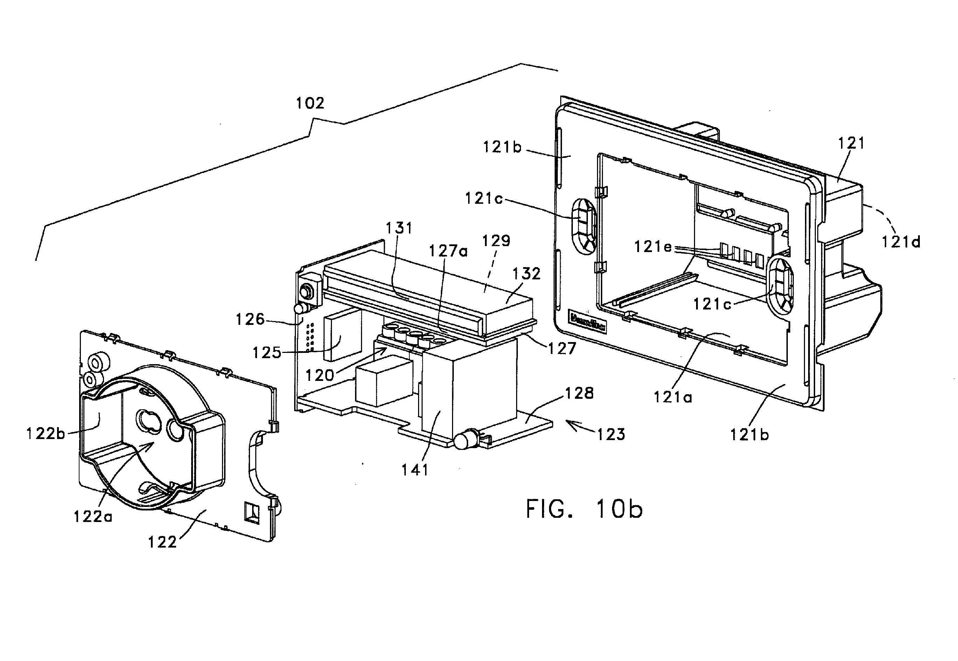

The controlled embeddable socket (Fig. 10) receives On/Off commands via radio and commands, through relays, the single electrical consumers or groups of consumers connected, as will be described later. It is provided with a green and red LED and is installed in the "503" embeddable box

The interface for relay-driven DIN modules is an RF input/output interface, functionally identical to the interface 79, with which to command consumers or groups of independent consumers; it is provided with a multi-pole female connector for connection of all the relay-driven DIN modules. The interface has an input only function and the commands may be transferred to the relay-driven DIN modules, mounted on DIN guides and connected through the connector. The device is installed on DIN rails.

The relay-driven DIN module is used to command independent consumers; it has a multi-pole male connector for connection to the interface module from which it receives its commands. The command for the consumers may be sent to the module via the interface, or be given manually by means of a button mounted on the device. The module is equipped with a 10A relay and is installed on DIN rails.

The "loose" controlled socket receives On/Off codes via radio and commands, through a relay, the electrical consumers connected. The socket may be commanded from the central unit controlling electric loads: when overloading occurs, a green LED blinks briefly before closing the relay and disconnecting the consumer line. That the socket is disconnected is signalled by a red LED. The device is inserted in Italian/German 230V standard sockets.

The "loose" controlled socket with dimmer receives command codes via radio link and commands, through the dimmer; the electrical consumers connected. It may be commanded by the central unit controlling electric loads: for controlled disconnection of the consumers and reporting on green and red LEDs. The dimmer function is customizable: during installation, the command to switch on may be set in "instantaneous" mode (it returns to the same regulation value as was present upon switching-off) or in "progressive" mode (returns to the same regulation value as was present at the time last switched off through a selectable rise ramp). The device is fitted into traditional Italian/German 230V standard sockets.

The battery-powered solenoid valve for radiators receives from the thermostat or other control devices the command for environment temperature management and permits management of the temperature of single areas (microclimate) or on a single control point (macroclimate). Fitting is directly on the radiator.

The multimedia audio panel is used for audio reporting of alarms or actuations in progress (for example, while an automatic gate is being opened or closed). During installation, the user can choose the type of melody, its duration and what events to associate it with. A melody and the actuation parameters may be changed through action on the Webphone. In the event of an alarm, the melody will be played as long as the cause persists or until the user takes action on the mute button. The device is installed in the "503" embeddable box.

The loose actuator for shutters receives, processes, transmits and actuates the commands and data coming from the devices associated with it during installation. It has a screw-on connector for connection, as well as to the motor, of two limit switches indicating the points where the shutters should stop. The command may be de-activated manually in cases where shutter control is linked to the wind sensor. The actuator has a relay and can be fitted at the most suitable point for shutter control.

The interface for multiple input contacts is a battery-powered RF input interface RF. Through it, up to 4 traditional type switches (normal buttons or microswitches) may be connected to the system, on an 8 wire, multi-pole cable, transforming a standard domestic wire series into an RF system. The interface can manage On/Off commands and regulation commands (e.g. dimmers). The device is installed in a "503" box.

The interface for wall panels is a battery-powered, RF input interface, with which to command consumers or independent groups of consumers; it is provided with a multi-pole female connector which permits connection of all the devices that it is possible to associate. The interface receives, processes, transmits and actuates the commands and data coming from all the devices connected to it at installation time and has an input only function. It supplies power to the associated customization device and receives commands from the latter. It is installed on the wall.

The IR presence sensor panel detects presence of people inside its radius of action through a passive sensor sensitive to infra red radiation; it is equipped with a directional focussing lens. Linked with an actuator it could, for example, be used to automatically switch on lights in passageways such as corridors or stairways. The sensor plugs into embeddable or wall-mount interfaces from which it also draws its power supply.

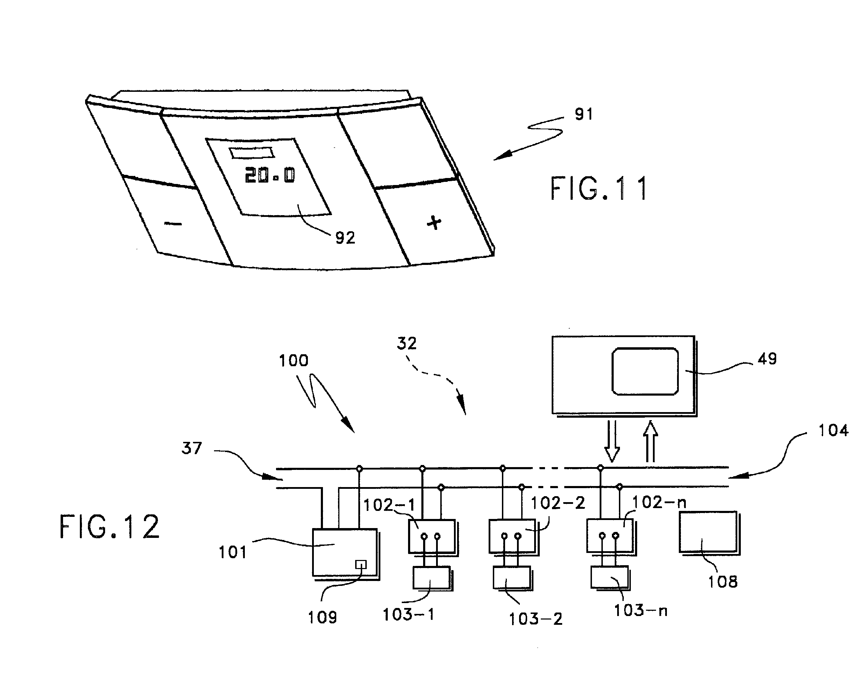

The thermostat panel 91 (Fig. 11), through an integrated precision sensor detects ambient temperature of the room it is installed in and sends a regulation command to a remote actuator (boiler, solenoid valve of the area or radiator, fancoil, etc.). On an LCD display (three-digit) 92 it posts the detected temperature reading and the regulation limits, which are settable manually by means of the +/keys. It may be used as a threshold regulator (On/Off thermostat) or to command proportional mixer solenoid valves (regulation of the supply water temperature). Various operating arrangements may be selected: night, day, anti-frost and heat regulation (cold/hot) by activating the keys located on the panel; the user's selections are shown on the LCD. The thermostat plugs into embeddable or wall-mount interfaces, from which it also draws its power supply.

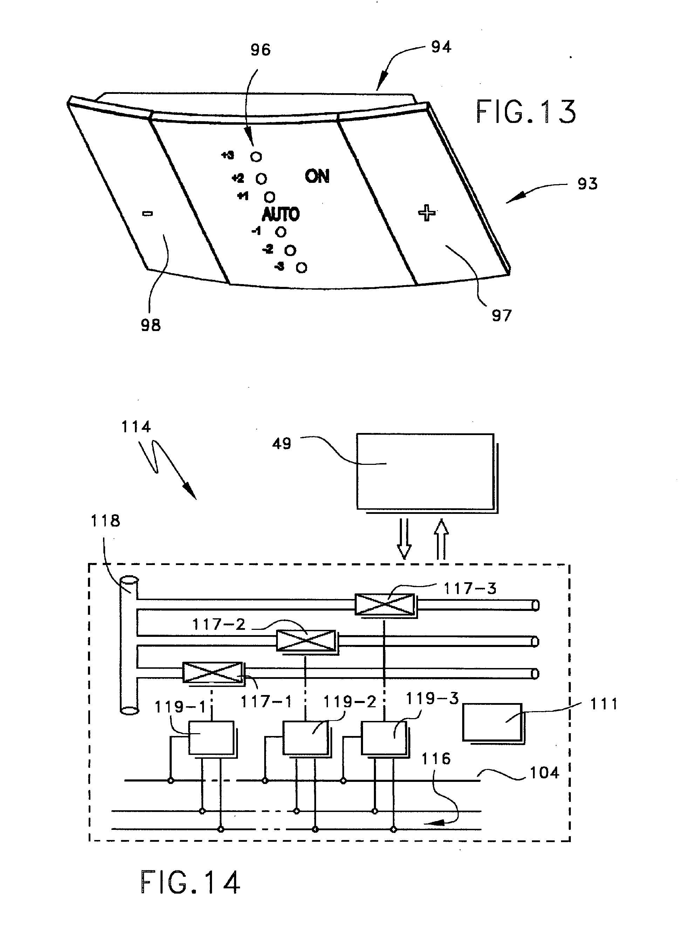

The temperature sensor panel designated with the numeral 93 (Fig. 13) has a heat sensitive element for detecting the ambient temperature of the room it is installed in. According to the invention, the sensor 93 has memory means for storing information on an ambient temperature threshold value and intervention means for comparing the temperature detected by the heat sensitive element with the threshold value and a transceiver which sends a regulation command to the remote actuator in response to activation of the intervention means.

In detail, the sensor 93 comprises a plate 94 having a cover function and also having an array of visual indicators 96 and two value-forcing keys 97 and 98, on the sides of the plate, respectively up and down. The automatic threshold value (AUTO) is, for example, that set by the sensor 91 or by the control unit 49 and the transceiver normally sends an actuation command (to fans, solenoid valves, etc.) whenever the temperature is at variance with the preset threshold. This threshold, in the room in which the sensor 93 is fitted, can be modified by the user.

By acting on the forcing keys 97, 98, the threshold value is changed in increments upwards or downwards. The indicators 96 are prearranged for displaying the AUTO status of the sensor 93 and the possible up or down incremental states set following actuation of the forcing keys.

The up forcing key 97 is associated with an increase in the threshold value and the down key 98 is associated with a decrease of this value. The visual indicators 96 comprise an array of LED's, each associated with an increment by one degree in the threshold value associated with each actuation of the two forcing keys 97 and 98.

The sensor 93 plugs into embeddable or wall-mount interfaces, from which it also draws its power supply.

The twilight sensor for outdoors is wall-mounted and is battery-powered. It sends a switch-on or switch-off command to lighting devices depending on the external brightness level. The sensor can also command other actuations, such as motion up or down of shutters, opening and closing of curtains, etc. It measures, at regular intervals, the brightness and compares it with the threshold value set upon installation; if the threshold is exceeded, after a programmable delay time, the sensor sends the command to the connected devices.

The wind sensor is battery-powered. It can measure wind speed value. Depending on the speed it detects, and on a preset speed threshold, it commands, for example, external shutters or curtains to be closed, so avoiding damage thereto.

The rain sensor is battery-powered. The sensor detects a rain situation. It commands a sprinkling system to be stopped, but may also be associated with other functions, such as for instance the closing of curtains or shutters.

To return to the characteristics of the system 32, the load management sub-system, designated with the numeral 100 in figure 12, provides management of the tapping of energy. As a result, insertion and exclusion of generic electric loads (various household appliances, electric motors, drives) are possible, either through a simple manual command, or on the basis of automatic commands coming from one or more sensor (twilight, infra red, etc.).

According to one characteristic of the invention, the input devices 38 of the sub-system 100 include a management central unit 101 (Fig. 9) and the functional devices 37 include controlled sockets 102-1, 102-2 for electric consumers 103-1, 103-2 connected to the electricity mains 104. The central unit 101 comprises a sensor 105 for detecting the timely power absorbed by the consumers and a circuit of the specific module 81 for comparing this power with a predefined maximum value recorded in its memory. The sockets 102 (Fig. 10b) power one or more consumers and each have an RF module 129 equal to the modules 79 and a relay 141 connected to the interface circuit and operating on an internal switch for controlled connection of the socket to the mains 104.

The management central unit 101 (Fig. 9) is prearranged for detecting a mains overload condition and sending commands for one of the controlled sockets 102-1, 102-2 in order to disconnect the pre-selected consumer or consumers, thereby avoiding a general service interruption.

The sub-system 100 (Fig. 12) is thus able to ward off system black-outs due to a tapping of power in excess of that permitted by contract with the supply utility. During the system installation it is possible to select the contractual power level, defining the threshold value at which the sub-system takes action to disconnect a consumer below the meter's heat protection trip value.

The management central unit 101 also has a memory that may be initialized for disconnecting one or more consumers of the sockets 102-1, 102-2 according to a given priority scheme. In turn, the control unit 49, during installation, is suitable for loading its memorising means with data defining this priority scheme.

The controlled sockets 102 are associated with suitable means for forcing the respective actuator to re-establish the connection. If the overload condition persists, the central unit 101 is suitable for commanding the disconnection of a lower priority consumer. In this way, the disconnected electric loads are automatically returned to their service conditions whenever the system's normal load condition is detected. Through the webphone 49, the user can define which loads are subject to the deactivation priority logic and which, on the other hand, for example the fridge, must never be automatically disconnected to avoid service interruptions.

Programming of the electric loads is also possible on the basis of user-defined time bands (for example, to take advantage of differentiated charge levels). This may be done from the control unit 49 by programming of the time or date of switching on/off of the controlled sockets. Again in the case of programming loads, the disconnection priority management concept still holds. Provision may also be made to exclude certain zones of the home from drawing energy (for safety reasons, for example).

The input devices 38 of the sub-system 100 (Fig. 12) may comprise presence, twilight and similar sensors, designated with the numeral 108, that can be initialized through the control unit 49 for the connection or disconnection of controlled sockets 102-n.

The management central unit 101 (Fig. 9) is housed in a module provided with a reset button 109 and suitable for mounting on DIN rails and being inserted in an electric panel, i.e. in the vicinity of the main switch. Power supply to a consumer may be restored automatically, forced by the Webphone 49 or through the push button 109. Of the overload condition persists, the central unit 101 will command disconnection of the consumer with lowest priority.
The controlled socket 102 (Fig. 10), in one embodiment, is accommodated in a embeddable module78 with a pair of LED's 112, one red, one green, for installation in a "503" type embeddable box, together with a aesthetic cover 113. When an overload reported by the central unit 101 occurs, it is first signalled with a short blinking of the green LED and is followed by closing of the relay and disconnection of the connected consumer line. The disconnected socket is signalled by the red LED lighting. Figs. 10a and 10b illustrate in detail respectively the outer structure, in assembled form, and the internal structure, in broken-down form, of the socket 102 of the invention.

In particular, the socket 102 comprises an outer, flanged type shell 121, open along a front side so as to form an aperture 121a; a lid 122 intended to close the aperture 121a on this front side; and an internal electronic assembly, generically indicated with the numeral 123, housed inside the shell 121.

To the front, the shell 121 is provided with a flange 121b extending all around the aperture 121a and is provided with two side holes 121c for screw-fastening of the socket 102 to the box 76, preferably of the 503 type, already placed in the wall 77 of the home.

In particular the flange 121b, once fastened to the box 76, is arranged in a configuration in which both the flange 121b and the lid 122, which define the front side of the socket 102, are flush with the wall 77.

Similarly to the known type electric sockets, the lid 122 comprises a contact pad 122a, female type, having an array of holes suitable for receiving an electric plug, and is also provided on the front with a projection 122b that forms around the contact pad 122a a seat suitable for guiding the plug, during the step in which it is inserted in the contact pad 122a.

The electronic assembly 123 comprises a lateral electronic board 126, on which a microprocessor 125 is mounted; an upper electronic board 127; and a lower electronic board 128, both perpendicular to the lateral board 126 and fastened to a respective end of the board 126, thereby forming a U-shape structure.

The upper board 127 bears a radio frequency receiving/transmitting unit 129, or R/F unit, for the exchange of signals via radio between the socket 102 and the other parts of the home automation system.

In particular this radio frequency unit 129, hidden in the drawings by a protecting screen 132, is provided for operating in a frequency band of between 868.0 and 868.6 MHz, and for this purpose comprises an antenna 131 for receiving and transmitting through the internal volume of the home.

The antenna 131 consists of a wire, folded in an L shape, which has a first rectilinear portion, not very long, perpendicular to the board 127, and a second, much longer rectilinear portion, which extends adjacent and parallel to a side 127a, of the board 127, arranged towards the front side of the socket 102, i.e. towards the lid 122.

In this way, when the socket 102 is accommodated in the box 76 and therefore embedded in the wall 77 of the home, the antenna 131 assumes a position adjacent to and aligned with the flush line of the wall 77, thereby allowing optimal transmission and reception of the radio signals exchanged between the socket 102 and the other parts of the home automation system, in particular the central unit 101.

The protecting screen 132 consists of a thin sheet folded in a C shape and is arranged above the R/F unit 129 for protecting it from any electromagnetic noise.

The antenna 131 may be made in forms different from the rectilinear one described above and, for instance, may be helicoidal shape.

The lower board 128 is arranged for supporting and integrating the power, or actuating part true proper, of the electronic assembly 123, and in particular it comprises a relay 141, the function of which is to enable or disable, as the case may be, the supply of power from the residential electricity mains to a consumer connected to the socket 102.

Typically this relay 141 intervenes to interrupt the delivery of power to a consumer connected to the socket 102, in the event of an overload.

The lower board 128 also bears a terminal block 120 for electric connection of the socket 102 to the electricity supply line 104.

To this end, the shell 121, along a rear end 121d, is provided with a perforated zone 121e, through which access may be had from the outside to the terminal block 120 for establishing the electrical connection embeddable module 78 is being installed in the corresponding box 76.

The socket 102 may at the front be coupled with an aesthetic cover 113 as shown in Fig. 10c.

During installation, each socket 102 is placed in a corresponding standard box, 503 type, already prearranged along on the wall 77 of the home, and also connected to the home electricity mains 104 by means of the terminal block 120.

The installation step also comprises a setting sub-step, the purpose of which is to establish the priority scheme that the central unit 101 will have to follow in commanding electrical disconnection of consumers or groups of consumers connected to the sockets 102, when failure situations arise. This setting work is done, in relation to the user's requirements, through the control unit 49.

Following this, during normal operation, the central unit 101 measures the timely electric load absorbed by each consumer through the respective 102 and, in case of an overload situation, i.e. when the electric current absorbed exceeds a pre-established value, it sends via radio waves signals to the various sockets 102 for commanding disconnection from the electrical network of the consumers connected to them, following the predefined priority scheme.

The sprinkler sub-system, designated with the numeral 114 in figure 14, provides for management of a central sprinkling system with various zones connected, via a safety low-voltage line (24V) 116, and solenoid valves 117 opening/closing the hydraulic circuit 118.

The functional devices 37 of the sub-system 114 comprise suitable relay modules 119, embeddable or DIN type and, for example powered by the mains, for the selective connection of the solenoid valves 117 to the low-voltage line. As input device 38, a rain sensor 111 could be provided, suitable for initialization through the control unit 49. It is also possible to connect an auxiliary pump to ensure the sprinkling system has sufficient pressure.

The solenoid valves 117 may be opened/closed manually, directly on the relay module, by pushbuttons, or by remote control. Logic and temporal programming of the individual opening/closing actions in the different zones may, on the other hand, be performed on the control unit 49.

The other standard features of the sub-system include: manual opening and closing of a single area of the sprinkler system; pump actuation; programming disabled on a signal coming from a rain sensor 111; checking the status of the actuators (LED); battery charge level indication.

The lighting sub-system includes the management of all the features typical of a residential type lighting system. Manual or automatic commands may be carried out for switching on/switching off/regulating the light intensity of single or multiple consumers from one or more control points.

Features of the lighting sub-system include: On/Off of one or numerous light points and of one or numerous groups of light points; variation of the light intensity of the light points and of one or numerous groups of light points; time-controlled On/Off of light points; automatic On/Off of one or numerous light points by presence or twilight sensors; indication of the status of actuators (on/off/light intensity level); indication of the battery charge level.

The automatic door/gate sub-system manages the automation of doors, gates, garage doors etc. and allows signalling of when these are opening/locking/closing. Command central units for the automation of automatic gates or garage doors may be interfaced for transmission of open/lock/close commands from button panels, remote control or inside video-intercom stations. There is also provision for a multi-melody jingle for use with the "bell" function, where the melody may be selected during installation or from the control unit 49.

The sub-system for automatic doors/gates may be integrated with the RF video-audio entry control system. The standard features of the sub-system include:
opening/locking/closing doors/gates from one or numerous points; opening of electric locks of doors/passages from one or numerous points; indication of the open/closed status (through a magnetic contact: opened/closed); output of an acoustic signal from one or numerous points; and battery charge level indication.

The curtains and shutters automation sub-system controls the automation of curtains and shutters in residential buildings. Generally speaking, it is possible to perform manual or automatic commands to raise/lower curtains or blinds or, in the latter case, to orient angle of the blades. Other elements may also be automated, such as ppep-hole windows, shutters and in general all motor-driven door/window openings. The standard features of the sub-system include: Opening/closing of single curtain/blind/motor-driven doors/windows from one or numerous points; regulation of position of the blades of a single blind from one or numerous points; opening/closing of sets of curtains/blinds/doors-windows from one or numerous points; regulation of position of the blades of sets of blinds from one or numerous points; opening/closing curtains/blinds/other openings by wind/rain/twilight sensors; indication of the open/closed status (through a limit switch contact); and battery charge level indication.

The heat regulation sub-system can control the temperature of buildings or of single zones/environments in the residential sector, by directly commanding heat regulation systems through On/Off type commands, or through action on solenoid valves strategically placed for single environment temperature control. It is possible, therefore, subject to compatibility with the existing hydraulic installation, to realize differentiated climate control thus guaranteeing a greater level of comfort in the home and, in some cases, granting energy savings.

Climate control may be implemented directly by the control unit 49 through time-differentiated management of the temperature set point. To all intents and purposes, the user therefore has a time/thermostat function, while simultaneously reaping the advantages of a user-friendly interface.

The features of the heat regulation sub-system include: control of the temperature of the home/building (comfort/standby/night temperature); control of temperature of single zones/environments (comfort/standby/night temperature); display of the temperature and set parameters; setting of parameters/thresholds; battery charge status.

Obviously, without prejudice to the principle of the invention, the embodiments and details of construction may be abundantly modified with respect to what has been described and illustrated in the foregoing purely by way of non-restrictive example, without exiting from the scope of the invention itself.

## Claims

1. Home automation system (31) comprising an array of functional devices (37), a plurality of input devices (38) associated with the said array of functional devices and a control unit (49) for said input and functional devices and wherein the control unit (49) and the input and functional devices are interconnected via radio link and constitute a automation system (32), the above-mentioned home automation system (31) being **characterized in that**
it is used in combination with an autonomous safety/security system (33) having input sensors (41), local and/or remote signalling devices (42) and a management unit (43) between said sensors and said signalling units;
said system (31) also comprising radio connecting means between the management unit (43) of the safety/security system (33) and the control unit (49) of the automation system (32) and/or the above-mentioned functional devices (37) for activating the safety/security system (33) upon control of the automation system (32) and/or for activating the automation system (32) upon control of the safety/security system (33).

2. Home automation system (31) according to claim 1, **characterized in that** the home automation system (32) exchanges data in a frequency band between 868.0 and 868.6 MHz and the safety/security system exchanges data at a frequency of 433.92 MHz FSK.

3. Home automation system (31) according to claim 1 or 2, **characterized in that** the control unit (49) of the automation system (32) consists substantially of a personal computer (Webphone) for managing and monitoring the status of the functional devices (37) and of the input devices (38) and wherein said control unit comprises means for activating and/or de-activating said management unit (43).

4. Home automation system (31) according to claim 3, **characterized in that** said radio connecting means comprise a protocol converter associated with the management unit (43) of the safety/security system.

5. Home automation system (31) according to claim 3 or 4, **characterized in that** the control unit (49) of the automation system (32) comprises:
memorizing means (64) for storing information concerning the installation environments and presence of the functional devices (37) and input devices (38) installed in the above-mentioned environments; and
displaying means responding to the information of the said memorizing means (64) and comprising a display screen (54) for representing said environments, the devices installed therein and their status.

6. Home automation system (31) comprising an array of functional devices (37), a plurality of input devices (38) associated with the functional devices and wherein said functional devices (37) and input devices (38) are distributed among various environments (A, B, C,...,N), the above-mentionned system (31) being **characterized in that** it also comprises a control unit (49) substantially consisting of a personal computer for managing and monitoring satatus of the input devices (38) and of the functional devices (37) and wherein said control unit (49) comprises:
memorizing means (64) for storing information about said environments (A, B, C,....N) and about the presence and distribution of the input devices (38) and functional device (37) in said environments; and
displaying means responding to the information of the memorizing means (64) and including a display screen (54) for representing said environments (A, B, C,...N), the devices (37, 38) installed therein, and their status; and
actuating means (59, 62) suitable for associations with representations of
said devices (37, 38) for selectively commanding the functional devices (37) represented,
the screen (54) being of the touch screen type and the actuating means being suitable for commanding a given functional device (37) in response to the touching on the screen of the representation of said given functional device.

7. Home automation system according to claim 6, **characterized in that** the input devices (38) and the functional devices (37) are interconnected via radio link and wherein the control unit (49) comprises radio interconnecting means for interacting via radio link with said input and functional devices (38, 37).

8. Home automation system (31) according to claim 6 or 7, **characterized in that** said displaying means are suitable for representing said devices as icons (66-1, 66-2,...66-n), and wherein said actuating means (59, 62) are suitable for commanding a given functional device (37) in response to the touching of the representative icon of said given functional device.

9. Home automation system (31) according to claim 6 or 7 or 8, **characterized in that** said displaying means are suitable for dynamically representing the status of a given functional device (37) as a bar diagram, and wherein said actuating means (59, 62) are suitable for regulating said given functional device (37) in response to the touching and displacement of an indicator on said bar diagram.

10. Home automation system (31) according to one of the claims from 6 to 9, **characterized in that** said memorizing means (64) are suitable for storing information about the programming of home automation scenarios comprising one or more of the following functions: lighting; electric load management; heating and air conditioning; opening and closing of doors, gates, curtains, shutters; sprinklers; safety; weekly programming; reporting of system failures; and backing up and restoring configuration data.

11. Home automation system (31) according to one of the claims from 6 to 10, **characterized in that** said control unit (49) has connecting means (61) with the telephone network and program means for access to and navigation in the Internet.

12. Home automation system (31) according to one of the claims from 6 to 11, **characterized in that** the control unit (49) includes a case (51) for the memorizing means (64) and a keyboard (56) for the input of data and commands in the control unit and wherein:
the screen (54) has LCD or slim display components and is integrated with said case (51); and
said case (51) includes a section (72) with the function of base for the screen (54) and is provided with a frontal housing compartment (74);
said keyboard (56) being suitable for accommodation and extraction with respect to the housing compartment (74) between an open configuration in which the keyboard is operative and a closed, inoperative configuration, is of minimal dimensions.

13. Home automation system (31), comprising an array of functional devices (37), input devices (38) associated with said array of functional devices and a control unit (49) for said input and functional devices and wherein the functional devices (37), the input devices (38) and the control unit (49) are interconnected via radio link and constitute a home automation system (32), said home automation system (31) being **characterized in that**
it is used in combination with an audio-video entry control system (34) having input devices (44) with manual and/or audio-video commands, and output devices (46) with electric and/or audio actuators,
said home automation system (44) further comprising connecting means between the control unit (49) and the input and output devices (44, 46) of the audio-video entry control system (34) for remoting the manual and/or audio-video commands, and the electric and/or audio actuators.

14. Home automation system (31) according to claim 13, **characterized in that** said control unit (49) has connecting means with the telephone network and includes program means (58, 63) for access to the Internet.

15. Home automation system (31) comprising an array of functional devices (37) suitable for connection to the electrical mains, input devices (38) associated with said array of functional devices and wherein said input and functional devices are interconnected via radio link, said system (31) being **characterized in that** the functional devices (37) include:
a load management central unit (101) for detecting the instantaneous power absorbed by the electrical consumers connected to the electrical mains (104) and comparing said power with a predefined maximum value; and
at least one controlled socket (102) for powering one or more consumers and having a respective radio frequency interface circuit (129) and an actuator (141) connected to the interface circuit for the controlled connection of said socket (102) to the electrical mains (104);
said management central unit (101) being arranged for detecting a mains overload condition (104) and sending commands for the interface circuit (129) of said socket for disconnecting the selected consumer or consumers, avoiding a general service interruption.

16. Home automation system (31) according to claim 15, **characterized in that** the functional devices (38) include numerous controlled sockets (102), said central unit (101) being arranged for disconnecting one or more consumers according to a scheme of priority among said sockets.

17. Home automation system (31) according to claim 16, **characterized in that** said management central unit (101) has memorizing means (64) suitable for activation for defining said priority scheme.

18. Home automation system (31) according to claim 17, **characterized in that** it comprises a control unit (49) for the input devices (38) and for the functional devices (37), and wherein the control unit (49) is suitable for loading said memorizing means (64) with data that define the above-mentioned priority scheme.

19. Home automation system (31) according to one of the claims from 15 to 18, **characterized in that** said controlled sockets (102) comprise means for forcing the respective actuator to restore the connection and wherein, should the overload condition persist, the management central unit (101) is suitable for commanding the disconnection of a lower priority consumer.

20. Control unit (49), illustratively though not exclusively for a home automation system (31), substantially consisting of a webphone including a case (51) for electronic and memory modules, a screen (54), LCD type or with slim display components, integrated with said case and a keyboard (56), said control unit (49) being **characterized in that**
said case (51) has a section (72) with the function of base for the screen, and in which a housing bay (74) contiguous with a support surface (73) is made; and
said keyboard (56) may be accommodated drawer style in the housing bay (74) and is suitable for being extracted for operational actuation.

21. Control unit (49) according to claim 20, **characterized in that** it comprises an array of keys (75) on the sides of the screen (54) for the control of operations relating to telephony.

22. Home automation system (32), comprising an array of functional devices (37) connectable to the electrical mains and input devices (38), associated with the functional devices (37), interconnected via radio link, said system (32) being
**characterized in that** each of the functional devices (37) and/or input devices (38) includes:
an embeddable module (78) for a given functional device (37) or input device (38), configured for being fitted in an embeddable parallelepiped box (76) of the standardized "three module" format;
at least one radio frequency input and/or output module (79) mounted in said embeddable module (78) for providing radio interconnection with the other input and/or functional devices (38, 37); and
a plate (82) applicable complementarily on said input module (79) with the function of cover and/or having components operatively associated with the given functional (37) and/or input (38) device.

23. Home automation system (32) according to claim 22, **characterized in that** said embeddable module (78) comprises a parallelepiped case (121) suitable for coupling with said embeddable parallelepiped box (76).

24. Home automation system (32) according to claim 22 or 23, **characterized in that** said plate (82) supports one or more push buttons (88) and/or display elements (90) and wherein said plate (82) and said embeddable module (78) may be connected through connectors (87) when the plate (82) is mounted on the embeddable module (78) for the transfer of commands and signals between the push buttons and/or the display elements and the radio frequency input/output module (79).

25. Home automation system (32) according to claim 22, **characterized in that** the input devices (38) include a sensor (105) for detecting the power absorbed by all the consumers connected to the mains and means for comparing said power with a pre-established maximum value and wherein said transceiver is suitable for sending the electrical socket (102) an actuating command for disconnecting the electrical consumer of said socket from the mains (104), when said maximum value is exceeded.

26. Home automation system (32) according to one of the previous claims, **characterized in that** the said given functional device (37) or input device (38) comprises memorizing means for storing information about identification and operation of the given functional device (37) or input device (38) and of a functional device (37) or input device (38) with which it is connected operatively.

27. Home automation system (32) according to claim 26, **characterized by** presetting means (PC, 49) suitable for loading, in the installation stage, the memorizing means with the above-mentioned information.

28. Home automation system (32) according to one of the previous claims, **characterized in that** the given functional device (37) or input device (38) is a thermostat (91, 93) and comprises an integrated sensor for detecting the ambient temperature of the room it is installed in and wherein the relative radio frequency input/output module (79) comprises a transceiver suitable for sending a regulation command to a remote heat regulation actuator.

29. Heat regulation device (91, 93) for a home automation system (32) according to claims 26 or 27 or 28, **characterized in that** the memorizing means are suitable for storing information about an ambient temperature threshold value, and the intervention means are suitable for intervening in response to comparison data between the temperature detected by the sensor and the threshold value and wherein the transceiver is suitable for sending the regulation command to the remote actuator in response to the activation of said intervention means.

30. Home automation system (32) according to claim 28, or 29, **characterized in that** the given functional device (37) or input device (38) comprises a display unit (92) for displaying the value of the temperature detected and of the regulation thresholds, and keys of said plate for setting said thresholds.

31. Thermostat device (93) according to claim 29, **characterized in that** it also comprises:
a plate (94) applicable on said device with a covering function and/or having an array of visual indicators (96) and at least one value-forcing button (+ -);
means associated with a reference status wherein said transceiver sends said regulation command in response to the comparison between the ambient temperature value and the threshold value; and
means associated with the actuating of the forcing button for incrementally increasing or decreasing the threshold value of said intervention means; said visual indicators (96) being prearranged for displaying the reference status of the device and the increments set.

32. Home automation system (32) according to one of the previous claims, **characterized in that** said plate (82) is alternatively mountable on devices suitable for wall-mounting.

33. Heat regulation device (93) for home automation system (32), having a remote actuator, the above-mentioned device comprising a sensor for detecting the ambient temperature and memorizing means for storing information about an ambient temperature threshold value, intervention means for comparing the temperature detected by the above-mentioned sensor with the above-mentioned threshold value and a transceiver suitable for sending a regulation command to the remote actuator in response to the activation of the intervention means, the above-mentioned heat regulation device being **characterized in that** it comprises
a plate (82) applicable on said device with a covering function and/or having an array of visual indicators (96) and at least one value-forcing button or key (+ -);
means associated with a reference status wherein said transceiver sends said regulation command in response to data regarding the comparison between the ambient temperature and the threshold value; and
means associated with the activation of the forcing button (+, -) for incrementally increasing or decreasing the threshold value of said intervention means;
said visual indicators (96) being prearranged for displaying the reference status of the device and the possible upward or downward incremental states set following activation of the above-mentioned button.

34. Heat regulation device according to claim 33 **characterized in that** it comprises two value-forcing buttons or keys, one of which is associated with the increase in the threshold value and the other is associated with the decrease of said threshold value.

35. Heat regulation device according to claim 33 or 34 **characterized in that** said visual indicators comprise a set of LED's, each of which associated with a given increment of said threshold value.

36. Heat regulation device according to claim 35, **characterized in that** said visual indicators comprise a set of LED's, each of which associated with a given increment of said threshold value.

37. Heat regulation device according to claims 34, 35 and 36, **characterized in that** said increments are of one degree centigrade, associated with single actuations of the two forcing keys.

38. Heat regulation device according to claim 37, **characterized in that** said plate (82) has a central zone wherein said LED are in view and two lateral zones in which said keys are in view.

39. Electrical socket (102) particularly suitable for the automation of a home environment, comprising an external shell (121), and an electronic assembly (123) placed inside said shell (121),
**characterized in that** said electronic assembly (123) includes at least one radio frequency unit (129) for the transmission and reception of radio signals, and **in that** said socket (102) is suitable for being conditioned by said signals for controlling the electrical current fed to a consumer through said socket (102).

40. Electrical socket (102) according to claim 39, in which said radio signals are exchanged with a controlling central unit (101), **characterized in that** said socket (102) is suitable for determining, in response to an overload signal received from said central unit (101), disconnection from the electrical mains (104) of said consumer.

41. Electrical socket (102) according to claim 40, **characterized in that** said socket is controlled via said radio signals in conformance with a pre-established priority scheme, for the purpose of disconnecting the consumer connected to it.

42. Electrical socket (102) according to claim 39 suitable for being mounted in a wall (77) in an embedded configuration with a front side (122) of said socket (102) arranged substantially flush with said wall, **characterized in that** said radio frequency unit (129) is arranged substantially adjacent to said front side (122) of said socket (102), in such a way as to permit an optimal transmission and reception of said radio signals, when said socket (102) is embedded in said wall (77).

43. Socket according to claim 42, **characterized in that** said radio frequency unit (129) comprises an antenna (131) having a rectilinear portion disposed adjacent and parallel to said front side (122).

44. Module according to claim 42, **characterized in that** said electronic assembly has a U-shape structure, defined by an upper board (127) bearing the radio frequency unit, a lateral board (126) bearing a microprocessor, and a lower board (128) substantially parallel to said upper board (127).

45. Socket according to claim 39, **characterized in that** said shell (121) has a box shape compatible with embedding in a wall box (76) conforming to the 503 format.

46. Embeddable module (78) particularly suitable for the automation of a home environment, comprising a shell (121), and an electronic assembly (123) housed inside said shell (121), said module (78) being intended for embedding in a wall (77) with a front side (22, 121b) of said module (78) arranged substantially flush with said wall (77),
**characterized in that** said electronic assembly (123) includes at least one radio frequency unit (129) for the reception and transmission of radio signals through the surrounding space, and
**in that** said radio frequency unit (129) is arranged substantially adjacent to said front side (86) of the module (78), so as to permit optimal transmission and reception of said radio signals, when said module (78) is embedded in said wall (77).

47. Module according to claim 46, **characterized in that** said shell (121) is provided with a mounting flange (121b) along the plane of said front side (86) and has a box shape compatible with embedding in a wall box (76) of the 503 type.

48. Module according to claim 46, **characterized in that** said radio frequency unit (129) works in a band of 868.0 - 868.6 MHz for exchanging information with the other parts of the home automation system (31).

49. Method according to claim 46 or 48, **characterized in that** said radio frequency unit (129) comprises an antenna (131) having a rectilinear portion arranged adjacent and parallel to said front side (86).

50. Method according to claim 46 or 48, **characterized in that** said radio frequency unit (129) comprises an antenna having a helicoidal shape, extending substantially parallel to said front side (86).

51. Module according to claim 46, **characterized in that** said electronic assembly (123) has a first electronic board (127) bearing the radio frequency unit (129), a second electronic board (126) bearing a microprocessor (125) associated with a programme for general management of the module (78), and a third electronic board (128) incorporating the actuation functionalities of said module (78).

52. Module according to claim 51, **characterized in that** said third electronic board (128) incorporates at least one switch (142, 143) for actuating the commands received and processed by said module (78).

53. Module according to claim 51 or 52, **characterized in that** said first (127), second (126) and third electronic board (128) define a U-shaped structure, in which said first electronic board (127) and said third electronic board (128) extend perpendicular to said second electronic board (126) and substantially parallel to one another.

54. Module according to claim 46, **characterized in that** it comprises on said front side (86) at least one connector (87) for the electrical connection between said module (78) and a control plate (82) suitable for being coupled with said module for the purpose of conditioning it by means of signals and commands sent by said plate, and a terminal board (120) arranged on a rear side of said module, opposite said front side (86), for the electrical connection between said module (78) and the domestic electrical network (104) of the home.

55. Module (78) according to claim 46, **characterized in that** it comprises a battery unit for the electrical feeding of said electronic assembly (123).

56. Embeddable modular unit (65) particularly suited for the automation of a home environment, consisting of
a box-shape module or interface (78) having a front side (86, 121b), said module (78) being intended for embedding in a wall (77) of said home environment according to a configuration in which said front side (86, 121b) is arranged substantially flush with said wall (77), and
a plate (82) suitable for coupling with said module (78) on said front side (86, 121b),
in which said module comprises at least one external shell (121),
an electronic interface assembly (123) housed in said shell (121), and
a radio frequency unit (129) incorporated in said electronic assembly (123) for the reception and transmission of radio signals through the surrounding space, and
in which said radio frequency unit (129) has an antenna (131) arranged substantially adjacent to said front side (86) to permit optimal reception and transmission of the radio signals, when said module (78) is embedded in said wall (77).

57. Embeddable modular unit according to claim 56, wherein said plate (82) integrates at least one functional device (88), and said module (78) comprises, on said front side (86), at least one connector (87) suitable for cooperating with a corresponding connector of said plate (82), when the latter is coupled with said module (78), so as to electrically connect said functional device (88) and the electronic assembly (123) housed in said shell (121).

58. Embeddable modular unit according to claim 57, **characterized in that** said plate (82) comprises at least one manually actuatable key (88) and **in that** said module (78) comprises at least one switch (142, 143) suitable for being conditioned by the activation of said key (88).

59. Embeddable modular unit according to claim 56, **characterized in that** said module (78) has a shape compatible with assembly in wall-mounting boxes conforming to the 503 standard.

60. Modular unit according to claim 56, **characterized in that** said plate consists simply of a lid without any functional devices.

61. Modular plate (82) for residential electrical installations, comprising a support (331),
a plurality of actuating mechanisms (334) arranged on a given portion of the surface of said support, and
a button panel defined by a plurality of key-covers (335, 336, 337) associated with said actuating mechanisms (334),
**characterized in that** said key-covers (335, 336, 337) are suitable for coupling with one or numerous adjacent actuating mechanisms for defining the configuration of said button panel,
and **in that** said plate also comprises a portion, adjacent to said key-covers, that may or may not house an additional functional device.

62. Modular plate (82) suitable for being installed in a node of a home automation system, mechanically and electrically connected to an underlying input and output unit, comprising a support (331), a printed circuit (332), arms (334), **characterized in that** it is configurable on the two sides by means of modular key-covers (335, 336, 337), and comprises a central portion (plaquette 333) configurable with functional devices for detecting and measuring physical quantities, with communication devices, with displays for displaying information or with a lid.

63. Modular plate according to claim 62, **characterized in that** said support (331) is modular and mechanically connectable to all the possible variants of the input and output units through a manual pressure mounting, with snap fastening.

64. Modular plate according to claim 63, **characterized in that** the printed circuit (332) is mounted on said support (331).

65. Modular plate according to claim 64, **characterized in that** said printed circuit (332) comprises LED's (341).

66. Modular plate according to claim 65, **characterized in that** said LED's (341) illuminate said modular, personalized key-covers (335, 336, 337).

67. Modular plate according to claim 64, **characterized in that** said printed circuit (332) comprises electrical connections to the input and output unit.

68. Modular plate according to claim 64, **characterized in that** said printed circuit (332) comprises contact pads or electrical connections to the specialized plaquette (333).

69. Modular plate according to claim 64, **characterized in that** said printed circuit (332) comprises command switches (340).

70. Modular plate according to claim 69, **characterized in that** said command switches (340) are programmable.

71. Modular plate according to claim 69, **characterized in that** said command switches (340) commend the switching on, switching off and regulation of the consumers connected to the plate.

72. Modular plate according to claim 69, **characterized in that** said command switches (340) are manually activated by the arms (334), pressure mounted on the support (331).

73. Modular plate according to claim 69, **characterized in that** said command switches (340) are four in number, arranged in the four corners of the printed circuit (332), where the plate has two or four modular key-covers (337, 336).

74. Modular plate according to claim 62, **characterized in that** said modular key-covers (335, 336, 337) are personalized with a suitable icon, illuminable by the LED's (341).

75. Modular plate according to claim 62, **characterized in that** said functional devices for detecting and measuring physical quantities are thermostats, clocks, infra red sensors, twilight sensors, temperature sensors, gas leak sensors.

76. Modular plate according to claim 62, **characterized in that** said communication devices are microphones, audio-video entry control devices, telecameras, displays.
